# FASCICULE DE BREVET EUROPEEN

(11) **EP 2 617 092 B1**
(45) Date de publication et mention de la délivrance du brevet: **04.03.2015**
(21) Numéro de dépôt: 11764803.0
(22) Date de dépôt: 19.09.2011
(51) Int. Cl.: H01M 10/052, H01M 10/0525, H01M 10/0567, H01M 10/0563, H01G 9/04, H01G 11/26, H01G 11/28, H01G 11/58, H01M 4/62, H01M 4/131, H01M 4/133, H01M 4/134

(54) **GÉNÉRATEUR ÉLECTROCHIMIQUE ET PROCÉDÉ DE RÉALISATION D'UN TEL GÉNÉRATEUR**
ELEKTOCHEMISCHER GENERATOR UND VERFAHREN ZUR HERSTELLUNG EINES GENERATORS
ELECTROCHEMICAL GENERATOR AND METHOD OF PRODUCING SUCH A GENERATOR

(30) Priorité: 17.09.2010 FR 1003705
(43) Date de publication de la demande: 24.07.2013
(73) Titulaire: Commissariat à l'Énergie Atomique et aux Énergies Alternatives, 75015 Paris (FR); Centre National de la Recherche Scientifique (CNRS), 75794 Paris Cedex 16 (FR); Université Joseph Fourier, 38041 Grenoble Cedex 9 (FR)
(72) Inventeur: MARCHAL, Lauréline, F-78280 Guyancourt (FR); ALLOIN, Fannie, F-38220 Vizille (FR); LEPRETRE, Jean-Claude, F-38340 Voreppe (FR); MARTINET, Sébastien, F-38210 Saint Quentin S/ Isère (FR)
(74) Mandataire: Talbot, Alexandre
(86) Numéro de dépôt international: PCT/FR2011/000507
(87) Numéro de publication internationale: WO 2012/035217

(56) Documents cités:
- WO-A2-02/060812
- US-A1- 2007 289 872
- FRANÇOIS TANGUY ET AL: "Lowering interfacial chemical reactivity of oxide materials for lithium batteries. A molecular grafting approach", JOURNAL OF MATERIALS CHEMISTRY, THE ROYAL SOCIETY OF CHEMISTRY, CAMBRIDGE, GB, vol. 19, no. 27, 21 juillet 2009 (2009-07-21), pages 4771-4777, XP002631126, ISSN: 0959-9428, DOI: DOI:10.1039/B901387C [extrait le 2009-05-26] cité dans la demande
- QINMIN PAN, HONGBO WANG, YINGHUA JIANG: "Natural graphite modified with nitrophenyl multilayers as anode materials for lithium ion batteries", J. OF MATERIALS CHEMISTRY, vol. 17, no. 2007, 2 novembre 2006 (2006-11-02), pages 329-334, XP002635671,

## Description

### Domaine technique de l'invention

L'invention concerne un générateur électrochimique comportant des première et seconde électrodes séparées par une solution électrolytique finale, ladite première électrode étant recouverte par une couche de passivation.

L'invention concerne également un procédé de réalisation d'un tel générateur.

### État de la technique

Les électrolytes utilisés pour les générateurs électrochimiques sont classiquement constitués d'un solvant et d'un sel électrolytique. Les générateurs électrochimiques regroupent les accumulateurs et les super-condensateurs. On définit un accumulateur comme un système de stockage d'énergie, utilisant des réactions électrochimiques afin de stocker et de restituer de l'énergie électrique. Les accumulateurs Li-ion utilisent généralement des électrolytes à base de solvants organiques contenant un sel de lithium dissous. Un super-condensateur est un condensateur électrochimique permettant de stocker une quantité d'énergie via des réactions d'adsorption en surface des matériaux d'électrodes et de restituer une densité de puissance, intermédiaire entre les batteries et les condensateurs électrolytiques classiques.

Des générateurs électrochimiques, en particulier des accumulateurs Lithium-ion, utilisant des électrolytes aqueux commencent, toutefois, à se développer.

Un accumulateur électrochimique aqueux est classiquement composé d'une électrode positive et d'une électrode négative, d'un séparateur poreux assurant l'isolation électronique entre les électrodes, positive et négative, d'un électrolyte à base d'eau dans lequel est dissous un ou des sels assurant la conductivité ionique. Les sels couramment employés sont, par exemple, H₂SO₄ pour les accumulateurs au plomb, un mélange KOH-LiOH-NaOH pour les accumulateurs alcalins et un sel de lithium tels que LiNO₃, Li₂SO₄, LiOH pour les accumulateurs aqueux au lithium. L'électrolyte imprègne tout ou partie de la porosité des électrodes et du séparateur. Chacune des électrodes positive et négative est composée d'un matériau actif, respectivement positif et négatif, d'un conducteur électronique comme le noir de carbone et les fibres de carbone, d'un épaississant et d'un liant.

Un super condensateur aqueux est classiquement composé de deux électrodes poreuses, intégrant soit des composés de type charbon actif à forte surface spécifique, soit des oxydes de métaux de transition de type MnO₂, RuO₂, Li₄Ti₅O₁₂, TiO₂, d'une membrane séparatrice poreuse entre les deux électrodes, d'un électrolyte aqueux dans lequel est dissous un ou des sels assurant la conductivité ionique tels que KOH, H₂SO₄, KNO₃, LiNO₃, NaSO₄.

Les performances des générateurs électrochimiques peuvent être affectées par des phénomènes d'instabilité de l'électrolyte liquide organique ou aqueux lors du fonctionnement de l'accumulateur. L'électrolyte doit effectivement supporter la tension de fonctionnement de l'accumulateur qui est comprise entre 1,9V et 5V selon le couple d'électrodes utilisées pour les électrolytes organiques et entre 1,2V et 2V pour les électrolytes aqueux. Pour des potentiels d'électrode supérieurs ou inférieurs à la stabilité de l'électrolyte, on observe des réactions parasites de décomposition de l'électrolyte catalysée à la surface des électrodes.

Le développement de solutions tendant à éliminer ou à diminuer ce phénomène de décomposition est particulièrement crucial, notamment, pour les accumulateurs Lithium-Ion à électrolyte aqueux pour lesquels ce phénomène est particulièrement contraignant.

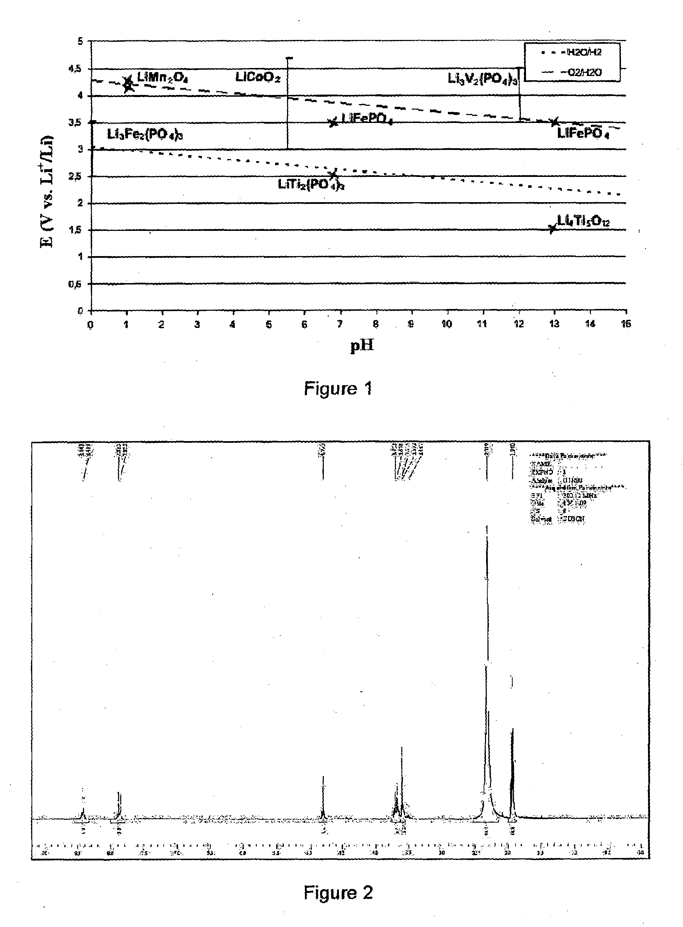

Comme représenté à la figure 1, la fenêtre de stabilité thermodynamique de l'eau en fonction du pH est de 1,23V et limite notablement le choix des matériaux actifs pour un tel générateur électrochimique. Ainsi, pour les matériaux actifs d'accumulateur Lithium-Ion ayant un potentiel d'insertion et désinsertion du lithium situé en dehors de la fenêtre de stabilité de l'eau, on observe la décomposition électrochimique de l'eau. En l'absence de phénomène de sur-tension, on observe l'oxydation de l'eau sur l'électrode positive pour des potentiels situés au-dessus de la droite représentée par un trait discontinu (en haut à la figure 1) et on observe la réduction de l'eau sur l'électrode négative pour des potentiels situés au-dessous de la droite représentée par un trait en pointillés (en bas à la figure 1). Les phénomènes de sur-tension liés à l'oxydation et à la réduction de l'eau sont faibles sur les matériaux d'insertion du lithium. La décomposition de l'eau est donc observée pour des potentiels proches de ceux fixés par la thermodynamique. La résolution de ce problème rendrait les générateurs électrochimiques à électrolyte aqueux attractifs. En particulier, ce problème constitue un verrou technologique pour le développement des accumulateurs Lithium-Ion à électrolyte aqueux. La levée de ce verrou technologique présente un grand intérêt pour les accumulateurs Lithium-Ion à électrolyte aqueux, notamment au niveau économique, sécuritaire et en matière de performances, comparativement aux accumulateurs Lithium-Ion à électrolyte organique qui en dépit d'une meilleure tension nominale, engendrent des coûts de production et de matières premières plus élevés et présentent des performances médiocres en forte puissance.

Différentes voies ont été proposées pour éviter ou diminuer le phénomène de décomposition de l'électrolyte liquide. Les brevets JP-A-2000340256 et JP-A-2000077073 exploitent, par exemple, les surtensions aux électrodes pour contrôler les réactions interfaciales.

Une autre solution proposée consiste à passiver au moins une électrode de l'accumulateur Lithium-ion afin d'inhiber la dégradation de l'électrolyte liquide. Le document US-A-20090155696 propose de réaliser un film isolant sur l'électrode, par polymérisation d'un monomère présent dans l'électrolyte de l'accumulateur.

Une autre voie consiste à former une couche de protection à la surface d'une d'électrode par greffage via un processus électrochimique du groupement aromatique d'un sel d'aryle diazonium permettant de modifier ou d'améliorer ainsi les propriétés physico-chimiques du matériau de l'électrode.

La formation d'une couche organique à la surface d'un matériau métallique, carboné ou d'un matériau d'insertion par réduction électrochimique d'un sel de diazonium a largement été décrite dans la littérature. Ce mécanisme de greffage a notamment été utilisé pour améliorer la résistance à la corrosion ou modifier la réactivité interfaciale d'électrodes.

Le mécanisme général de greffage par réduction électrochimique est représenté par la réaction suivante : 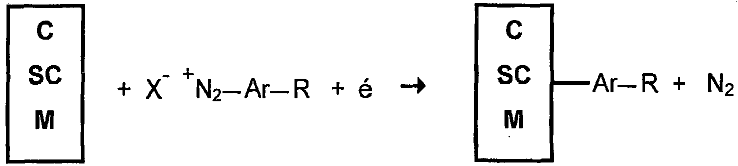 dans laquelle :
R est un substituant du groupement aryle, X un anion tel qu'un halogénure ou un ion BF₄⁻, C du carbone, SC un semi-conducteur et M un métal.

À titre d'exemple, Brooksby, P.A. et al. ont décrit dans l'article "Electrochemical and Atomic Force Microscopy Study of Carbon Surface Modification via Diazonium Reduction in Aqueous and Acetonitrile Solutions", (Langmuir, 2004, 20, P.5038-5045), une étude concernant la réduction électrochimique des sels de 4-nitrobenzène-diazonium et 4-nitroazobenzène-4'-diazonium en milieu acide et acétonitrile, à la surface d'un substrat recouvert d'une résine photosensible. Les auteurs ont mis en évidence la création d'une liaison covalente carbone-carbone (substrat/produit organique) et l'influence de plusieurs paramètres tels que la durée de l'étape de réduction électrochimique, le potentiel appliqué, le type de substrat, la concentration en sels de diazonium et les groupements chimiques portés par ce sel sur l'épaisseur et la structure du film ainsi formé.

Récemment, des travaux de Tanguy, F. et al. ont proposé de réaliser une couche de passivation sur des électrodes positives de batterie Lithium-ion à base d'oxyde, par greffage d'un sel d'aryle diazonium. Dans l'article "Lowering interfacial chemical reactivity of oxide materials for lithium batteries. A molecular grafting approach", (Journal of Materials Chemistry, 2009, n° 19, P.4771-4777), Tanguy, F. a montré que le sel de 4-nitro-benzènediazonium-tétrafluoroborate (NO₂C₆H₄N₂⁺BF₄⁻) dissous dans un électrolyte organique d'éthylcarbonate-diméthylcarbonate (EC-DMC-LiF₆) forme une couche organique à la surface d'une l'électrode Li_{1.1}V₃O₈ par chimiosorption. Le greffage par réduction électrochimique du sel de diazonium à la surface de l'électrode positive de Li_{1.1}V₃O₈ se déroule lorsque l'on impose à l'électrode un potentiel inférieur au potentiel de réduction du sel de diazonium. La présence d'une couche organique obtenue par un tel procédé ne limite pas le transfert de charge de l'électrode et inhibe fortement la décomposition de l'électrolyte organique catalysée à la surface de l'électrode.

### Objet de l'invention

L'objet de l'invention a pour but de réaliser un générateur électrochimique ayant des performances améliorées remédiant aux inconvénients de l'art antérieur.

En particulier, l'objet de l'invention a pour but de proposer un générateur électrochimique à électrolyte aqueux stable jusqu'à une tension de fonctionnement élevée.

Selon l'invention, ce but est atteint par un générateur électrochimique et un procédé de réalisation d'un tel générateur selon les revendications annexées.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 correspond à un diagramme de stabilité de l'eau représentant la tension nominale de l'eau en fonction du pH ainsi que les potentiels d'insertion et de désinsertion de différents matériaux actifs d'électrode d'accumulateur Lithium-Ion.
La figure 2 représente un spectre RMN ¹H (300 12 MHz) d'un sel de diazonium selon l'invention dans de l'acétonitrile (d_{H} = 1,94 ppm), réalisé avec un spectromètre Bruker Avance 300 avec sonde QNP 5mm.
La figure 3 représente la superposition de trois spectres obtenus selon une méthode de Réflexion Totale Atténuée (ATR), d'un échantillon d'un sel de diazonium selon l'invention, noté DS₃, d'un échantillon d'une électrode LiFePO₄, recouverte d'une couche de passivation selon l'invention, notée D₁, et d'un échantillon comparatif d'une électrode LiFePO₄ nue, notée D₀.
La figure 4 représente la superposition de trois spectres infrarouge obtenus selon une méthode ATR, d'un échantillon d'un sel de diazonium, noté S₂, et de deux échantillons comparatifs, respectivement, de l'électrode D₀ nue et d'une électrode passivée avec le sel S₂, notée D₂.
La figure 5 représente trois courbes de voltammétrie cyclique obtenues pour une cellule électrochimique comportant, respectivement, l'électrode D₀, D₁ et D₂ dans un électrolyte aqueux LiNO₃ 5M.

### Description de modes particuliers de réalisation.

Il est proposé une famille de sels de diazonium particulièrement avantageux pour une utilisation dans une solution électrolytique initiale d'un générateur électrochimique c'est-à-dire d'un super-condensateur ou d'un accumulateur.

On entend par solution électrolytique "initiale" d'un générateur électrochimique, une solution électrolytique présente dans le générateur électrochimique avant la première charge de ce générateur. Les solutions électrolytiques initiales contenant de tels sels sont plus stables que celles de l'art antérieur et participent à l'amélioration des performances du générateur, en particulier, d'un accumulateur Lithium-Ion.

L'amélioration est particulièrement significative dans le cas d'une utilisation dans une solution électrolytique aqueuse. En effet, il a été constaté de façon surprenante que cette famille de sels de diazonium ralentit, notablement, la cinétique d'oxydation et de réduction de l'eau sur les électrodes du générateur électrochimique sans néanmoins affecter les performances du générateur électrochimique et, en particulier, sans limiter les cinétiques de transferts de charge associés à l'insertion /désinsertion du cation lithium dans le matériau d'intercalation d'un accumulateur Lithium-Ion.

Selon un mode de réalisation particulier, le sel de diazonium a la formule générale (1) suivante :

X^{- +}N≡N-A-R₁-(OR₂)ₙ-OR₃ (1)

dans laquelle
n est un entier compris entre 1 et 10, de préférence entre 1 et 4,
X- représente un contre-ion du cation diazonium choisi parmi les halogénures, BF₄⁻, NO₃⁻, HSO₄⁻, PF₆⁻, CH₃COO⁻, N(SO₂CF₃)₂⁻, CF₃SO₃⁻, CH₃SO₃⁻, CF₃COO⁻, (CH₃O)(H)PO₂⁻, N(CN)₂⁻,
R₁ est choisi parmi le groupe constitué par -CH₂-, une chaîne alkyle comprenant, de préférence, de 1 à 6 atomes de carbone, linéaire ou ramifiée, cyclique ou acyclique,
R₂ est choisi parmi le groupe constitué par -CH₂-, une chaîne alkyle comprenant, de préférence, de 2 à 6 atomes de carbone, linéaire ou ramifiée, cyclique ou acyclique, de préférence, un groupement méthylène-, éthylène-, n-propylène-, iso-propylène-, n-butylène-, tert-butylène-, sec-butylène- et n-pentylène-,
R₃ est choisi parmi le groupe constitué par -CH₃, une chaîne alkyle comprenant, de préférence, de 2 à 6 atomes de carbone, linéaire ou ramifiée, cyclique ou acyclique et un groupement de formule (2) suivante : 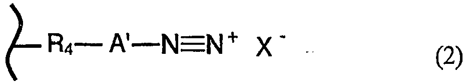 dans laquelle
A' est un groupement hydrocarboné aromatique, mono ou polycyclique, choisi parmi le groupe constitué par le phényle, les groupements aryles, les groupements polyaromatiques condensés, éventuellement substitués,
R₄ est choisi parmi le groupe constitué par -CH₂-, une chaîne alkyle comprenant, de préférence, de 2 à 8 atomes de carbone, linéaire ou ramifiée, cyclique ou acyclique et,

A est identique ou différent de A' et représente un groupement hydrocarboné aromatique, mono ou polycyclique, choisi parmi le groupe constitué par le phényle, les groupements aryles, les groupements polyaromatiques condensés, éventuellement substitués, à l'exception du groupement de formule (3), représentée ci-après, lorsque R₃ est choisi parmi le groupe constitué par -CH₃, une chaîne alkyle, linéaire ou ramifiée, cyclique ou acyclique : 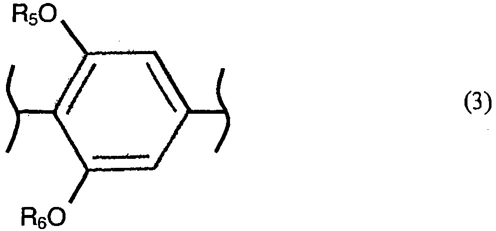 dans laquelle
R₅ et R₆ sont identiques ou différents et choisis indépendamment parmi le groupe constitué par -CH₃, un groupement alkyle, linéaire ou ramifié, cyclique ou acyclique.

On entend par un groupement aryle, un système aromatique ayant un ou plusieurs cycles aromatiques, éventuellement, substitués.

Lorsque A et/ou A' est un groupement aryle, on choisira de préférence, un groupement aryle comprenant de 6 à 9 atomes de carbone, par exemple, un groupement phényle, tolyle, xylyle, triméthyl-phényle. Dans tous les cas, la fonction diazonium est portée sur le cycle aromatique du groupement aryle.

On entend par groupement polyaromatique condensé, un système aromatique polycyclique formé de plusieurs noyaux benzéniques fusionnés. La fonction diazonium peut être portée sur n'importe lequel des cycles aromatiques du groupement polyaromatique condensé.

Lorsque A et/ou A' est un groupement polyaromatique condensé, on choisira, de préférence, un groupement polyaromatique comprenant de 10 à 45 atomes de carbone, éventuellement substitués par un ou plusieurs groupements choisis parmi le groupe constitué par -H, -CH3, un halogénure, une chaîne alkyle, linéaire ou ramifiée, comprenant de 2 à 8 atomes de carbone et, éventuellement, un ou plusieurs hétéroatomes choisi(s) parmi O, S et N.

Le sel de diazonium est dépourvu de fonctions hydroxyle de manière à minimiser l'affinité du sel de diazonium avec l'eau de la solution électrolytique, par exemple, en évitant la création de liaisons de type Van der Waals et/ou hydrogène. En particulier, R₁, R₂ et R₃ sont avantageusement dépourvus de fonctions hydroxyle afin d'obtenir un sel de diazonium ayant une partie apolaire A et A' contenant le groupement hydrocarboné aromatique et une partie polaire, aprotique, constituée par une chaîne polyéther.

Par ailleurs, A et A' peuvent être identiques ou différents et choisis parmi les groupements phényles, anthracényle et naphtalényle, éventuellement substitués, de préférence, par un ou plusieurs groupements choisi(s) parmi le groupe constitué par-H, -CH₃, un halogénure, une chaîne alkyle, linéaire ou ramifié, comprenant de 2 et 8 atomes de carbone et, éventuellement, un ou plusieurs hétéroatomes choisi(s) parmi O, S et N.

Selon un mode de réalisation particulier, le sel de diazonium peut, avantageusement, être un sel de bis-diazonium de formule (1) dans laquelle R₃ est un groupement de formule (2).

Le sel de diazonium peut, par exemple, être un sel de bis-diazonium de formule générale (4) suivante : 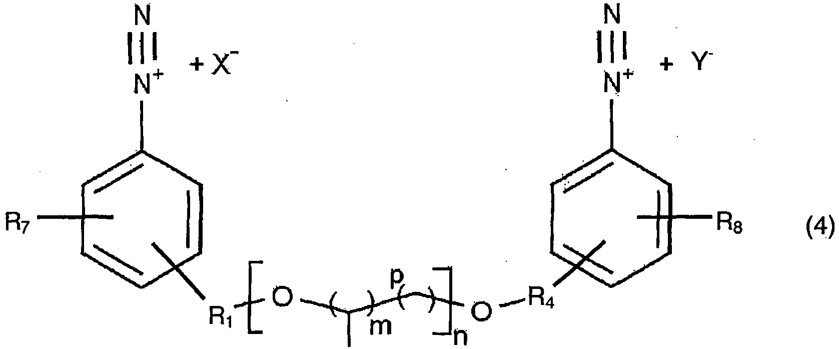 dans laquelle :
n est un entier compris entre 1 et 10, de préférence entre 1 et 4,
m est égal à 0 ou 1,
p est un entier compris entre 1 et 5, avantageusement égal à 2,
X⁻ et Y⁻ sont identiques ou différents et représentent, indépendamment, un contre-ion du cation diazonium choisi parmi les halogénures, BF₄⁻, NO₃⁻, HSO₄⁻, PF₆⁻, CH₃COO⁻, N(SO₂CF₃)₂⁻, CF₃SO₃⁻, CH₃SO₃⁻, CF₃COO⁻, (CH₃O)(H)PO₂⁻, N(CN)₂⁻, R₁ et R₄ sont identiques ou différents et choisis indépendamment parmi le groupe constitué par -CH₂-, une chaîne alkyle comprenant, de préférence, de 1 à 6 atomes de carbone, linéaire ou ramifiée, cyclique ou acyclique,
R₇ et R₈ sont identiques ou différents et choisis indépendamment parmi le groupe constitué par -H, -CH₃, un halogénure, une chaîne alkyle comprenant, de préférence, de 2 à 8 atomes de carbone, linéaire ou ramifié, contenant éventuellement un ou plusieurs hétéroatomes, avantageusement choisi(s) parmi O, S et N.

Le sel de bis-diazonium possède, avantageusement, une chaîne polyéther permettant de solvater les cations, en particulier les ions Li⁺. La chaîne polyéther est, avantageusement, un poly(oxyéthylène). Ainsi, dans la formule (4) décrite ci-dessus, m est de préférence égal à 0 et p compris entre 2 et 4, avantageusement égal à 2.

De même, la chaîne polyéther située entre les groupements aromatiques de A et A' est, de préférence, en position benzylique. Pour ce faire, chacun des R₁ et R₄ représente, avantageusement, un groupement -CH₂-, respectivement, dans les formules (1) et (2).

Selon un autre mode de réalisation particulier, la chaîne polyéther est, avantageusement en position para- par rapport aux fonctions diazonium. Le sel de diazonium a une formule générale (5) suivante : 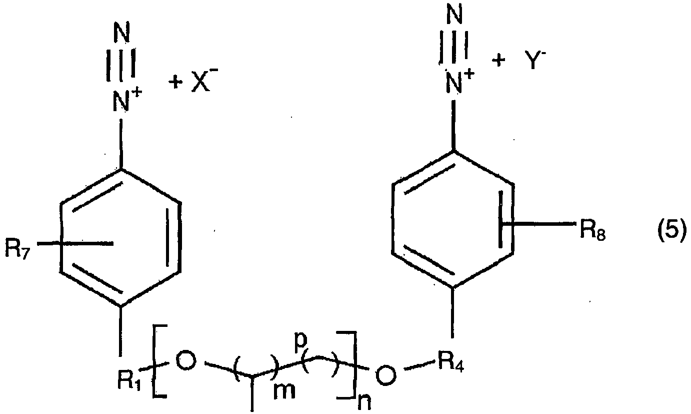 dans laquelle :
n est un entier compris entre 1 et 10, de préférence entre 1 et 4,
m est égal à 0 ou 1,
p est un entier compris entre 1 et 5, avantageusement égal à 2,
X⁻ et Y⁻ sont identiques ou différents et représentent, indépendamment, un contre-ion du cation diazonium choisi parmi les halogénures, BF₄⁻, NO₃⁻, HSO₄⁻, PF₆⁻, CH3COO⁻, N(SO₂CF₃)₂⁻, CF₃SO₃⁻, CH₃SO₃⁻, CF₃COO⁻, (CH₃O)(H)PO₂⁻, N(CN)₂⁻, R₁ et R₄ sont identiques ou différents et choisis indépendamment parmi le groupe constitué par -CH₂-, une chaîne alkyle comprenant, de préférence, de 1 à 6 atomes de carbone, linéaire ou ramifiée, cyclique ou acyclique,
R₇ et R₈ sont identiques ou différents et choisis indépendamment parmi le groupe constitué par -H, -CH₃, un halogénure, une chaîne alkyle comprenant, de préférence, de 2 à 8 atomes de carbone, linéaire ou ramifié, contenant éventuellement un ou plusieurs hétéroatomes, avantageusement choisi(s) parmi O, S et N.
R₇ et R₈ sont choisis de manière à favoriser la stabilité des fonctions diazonium. On évitera, par exemple, de substituer les cycles aromatiques avec des groupements R₇ et R₈, méthoxy ou éthoxy, en position ortho- et/ou méta par rapport aux fonctions diazonium. Dans la formule (5), R₇ et R₈ peuvent, avantageusement, être identiques et représenter, de préférence, un atome d'hydrogène.

Un sel de bis-diazonium de formule (5) peut être obtenu suivant une méthode de synthèse comportant trois étapes. Une première étape consiste à additionner un polyéther via une ou deux fonctions hydroxyles sur le nitro-bromométhyl-benzène, de préférence le 4-nitro-1-bromométhyl-benzène, selon le schéma réactionnel (1) suivant :

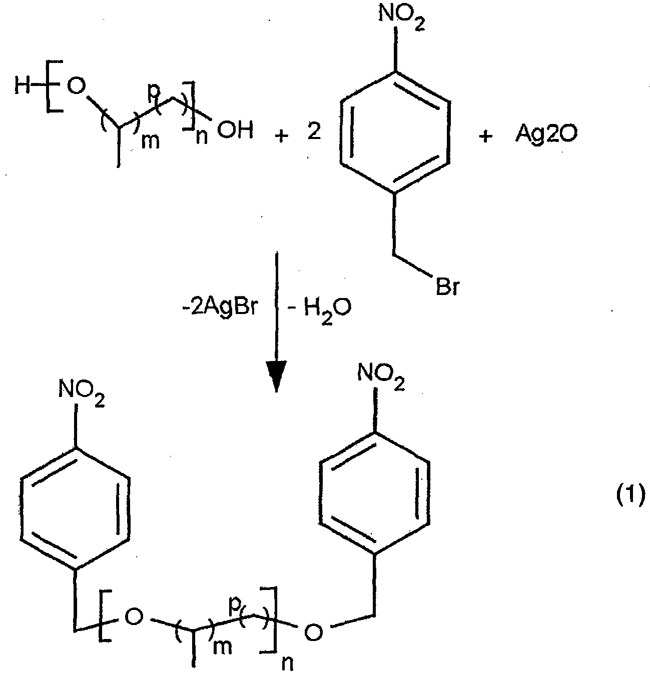

L'étape réactionnelle (1) permet d'additionner le groupement benzylique du 4-nitro-1-bromométhyl-benzène à chaque extrémité d'un polyéther dihydroxylé par l'intermédiaire des deux fonctions hydroxyle libres de la chaîne polyéther. On obtient alors une chaîne polyéther ayant un groupement nitrobenzène à chacune de ses extrémités. En choisissant différents polyéthers dihydroxylés de départ c'est-à-dire en choisissant la valeur de n, m et p de façon appropriée, on peut facilement faire varier la longueur et la nature de la chaîne polyéther séparant les deux cycles aromatiques apolaires situés aux extrémités du polyéther ainsi formé. On entend par "nature" le caractère hydrophile/hydrophobe de la chaîne polyéther et son caractère solvatant vis-à-vis du Lithium.

Une seconde étape consiste à réduire le groupement nitro des cycles aromatiques du polyéther obtenu en groupement amino, selon tout procédé connu, à l'issue de la première étape. Cette étape peut, par exemple, être réalisée par une réduction classique utilisant l'hydrazine, catalysée par du palladium carboné, noté Pd-C.

On obtient alors le composé de formule générale (6) suivante :

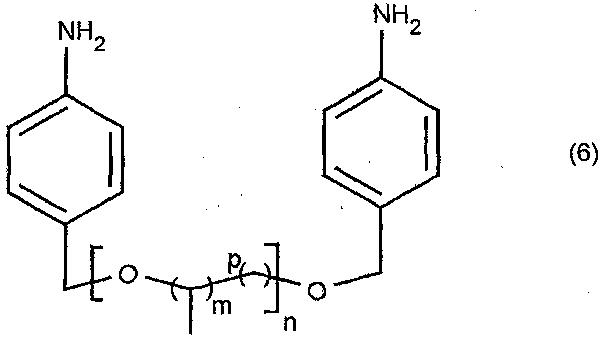

Une troisième étape consiste en une réaction de diazotation selon tout procédé connu, qui permet de transformer les deux groupements amino en groupements diazonium. La réaction de diazotation est réalisée, par exemple, par addition d'acide tétrafluoroborique et de nitrite d'isoamyle au polyéther diaminé obtenu à la seconde étape décrite ci-dessus. On obtient alors un sel de bis-diazonium de formule générale (5) dans laquelle X-représente le contre-ion tétrafluoroborate BF₄⁻.

### EXEMPLE I

Dans la méthode de synthèse d'un sel de bis-diazonium, le sel du tétrafluoroborate de bis(4-diazoniumbenzyl)-trioxyéthylène, noté DS3, a été réalisée à partir du 4-nitro-1-bromométhyl-benzène et du triéthylène glycol selon le protocole décrit ci-après. Ce sel correspond au sel de bis-diazonium de la formule (5) dans laquelle n=3, p=2, m=0 et X⁻ et Y⁻ sont identiques et représentent l'ion BF₄⁻.

### Etape 1 : synthèse du dérivé nitré

Tous les produits sont séchés préalablement soit sur tamis moléculaire pour le triéthylène glycol soit en température sous vide pour l'oxyde d'argent Ag₂O et le 4-nitro-1-bromométhyl-benzène. Dans un ballon, on mélange 10,39 g de 4-nitro-1-bromométhyl-benzène (soit 0,0481 mol) et 3,61 g de triéthylène glycol (0,024 mol) dans 170 mL de dichlorométhane (CH₂Cl₂) sec, fraîchement distillé sur hydrure de calcium. On ajoute 22,2 g d'oxyde Ag₂O en excès (0,096 mol). Le ballon est maintenu sous argon 48 heures à reflux dans le CH₂Cl₂. Du tamis moléculaire sec (séché sous vide à 300°C) est ajouté au milieu réactionnel, pour piéger l'eau qui se forme lors de la réaction.

L'oxyde Ag₂O en excès et le bromure d'argent AgBr produit sont éliminés par filtration ou centrifugation dans le dichlorométhane où le composé nitré est soluble. Après purification sur colonne de silice avec un mélange dichlorométhane/méthanol, on obtient 7,5 g (0,0178 mol) de bis(4-nitrobenzyl)-trioxyéthylène pur et sec avec un rendement de 74 %.

### Etape 2 : Réduction du dérivé nitré

Dans un ballon, 5 mmol de bis(4-nitrobenzyl)-trioxyéthylène obtenu précédemment sont mélangés à 10 mL d'hydrazine monohydrate, à 80 mL d'éthanol fraîchement distillé et à 0,05 g de palladium carboné (Pd-C) à 10%. Ce mélange est porté à reflux pendant 24 heures sous agitation puis filtré afin de retirer le Pd-C. Le filtrat obtenu est ensuite concentré à l'évaporateur rotatif afin de réduire son volume à quelques dizaines de millilitres. Le filtrat, une fois concentré, est purifié par extractions successives dans une ampoule à décanter par un mélange dichlorométhane/eau de manière à retirer toute trace d'hydrazine. Après séchage sous vide, on obtient du bis(4-aminobenzyl)-trioxyéthylène purifié avec un rendement de 80%, sous forme d'un liquide de couleur jaune pâle.

### Etape 3 : Diazotation

Dans un erlenmeyer, on mélange 72,9 mmol de bis(4-aminobenzyl)-trioxyéthylène obtenu précédemment avec 364 mL d'éthanol distillé. On ajoute 438 mmol d'acide tétrafluoroborique. Le mélange est amené à 0°C à l'aide d'un bain de glace. Puis, on ajoute sous agitation magnétique, goutte-à-goutte, 438 mmol de nitrite d'isoamyle. L'ensemble est maintenu à 0°C, sous agitation, pendant 1 heure avec obtention d'une huile. De l'éther diéthylique est ajouté afin de précipiter le sel de tétrafluoroborate de bis(4-diazoniumbenzyl)-trioxyéthylène. Puis, le mélange est maintenu à 0°C, sous agitation magnétique, pendant 1 heure environ. Le mélange est alors placé au réfrigérateur pendant une nuit afin de compléter la précipitation. Après filtration, on obtient le sel de tétrafluoroborate de bis(4-diazoniumbenzyl)-trioxyéthylène avec un rendement de 70%.

Comme représenté sur la figure 2, le sel de tétrafluoroborate de bis(4-diazoniumbenzyl)-trioxyéthylène obtenu est quasiment pur. Les traces d'impuretés éventuelles peuvent, éventuellement, être éliminées par des opérations de purification successives additionnelles selon des pratiques courantes dans le domaine de la synthèse chimique.

Plusieurs sels de bis-diazonium ont été synthétisés selon le même mode opératoire en faisant varier la valeur n dans la formule (5) du sel de diazonium.

Un sel de diazonium, noté DS5, a également été synthétisé. DS5 a une structure de formule (1) avec A étant un groupement phényle, R₁ un groupement -CH₂-, R₂ un groupement-CH₂-CH₂-, R₃ un groupement -CH₃ et n=1.

Les résultats ont été répertoriés dans le tableau I suivant :

**TABLEAU I**

| **Référence/ valeur de n:m:p dans la formule (1)** | **Molécule de diazonium** | **Polyether de départ** | **Rendement global %** |
|---|---|---|---|
| DS2 / 2:0:2 | 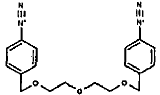 | 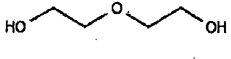 | 20 |
| DS3 / 3:0:2 | 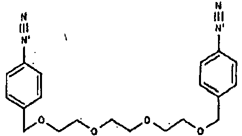 | 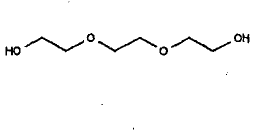 | 40 |
| DS4 / 4:0:2 | 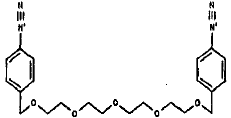 | 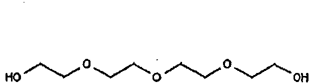 | 40 |
| DS5 / 1:0:2 | 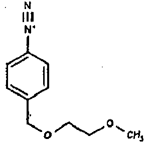 | 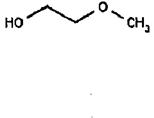 | 30 |
| DS6 / 2:1:1 | 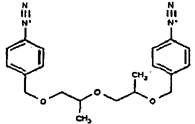 | 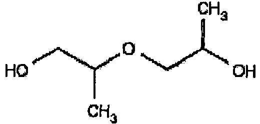 | 35 |
| DS7 / 3:1:1 | 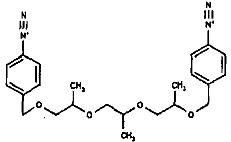 | 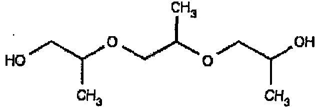 | 30 |

Bien que les modes de réalisation particuliers décrits ci-dessus décrivent un sel de diazonium dont la fonction diazonium est en position para- sur le groupement hydrocarboné aromatique de A et, éventuellement de A', l'objet de l'invention ne se limite pas à cette position. Il peut également être envisagé de réaliser un sel de diazonium dont la ou les fonctions diazonium sont en position ortho- ou méta- selon une méthode de synthèse similaire à celle décrite ci-dessus, en choisissant des produits de départ appropriés.

Une solution électrolytique comportant le sel de diazonium décrit ci-dessus peut, avantageusement, être utilisée dans un accumulateur Lithium-Ion, non chargé, de manière à former une couche de passivation sur une électrode de l'accumulateur Lithium-ion, lors de la première charge.

Selon un mode de réalisation particulier, une électrode d'un accumulateur Lithium-ion est passivée par réduction électrochimique d'une solution électrolytique initiale contenant le sel de diazonium décrit ci-dessus.

L'accumulateur Lithium-ion comporte des première et seconde électrodes isolées l'une de l'autre par un séparateur. Le séparateur peut être un film microporeux en polyéthylène ou en polypropylène, en cellulose ou en polyfluorure de vinylidène imprégné par une solution électrolytique.

La première électrode est, de préférence, constituée par un matériau choisi parmi les métaux et leurs alliages, le carbone, les semi-conducteurs et les matériaux d'insertion du lithium.

La première électrode constituant l'électrode négative peut, par exemple, être à base de Li₄Ti₅O₁₂, Li₃Fe₂(PO₄)₃ ou TiO₂, ou un mélange de ces matériaux et éventuellement supportée par un feuillard de cuivre. La seconde électrode constituant l'électrode positive peut, par exemple, être à base de LiCoO₂, LiMn₂O₄, LiFePO₄, Li₃V₂(PO₄)₃ ou d'autres oxydes lamellaires comme LiNiCoAlO₂ et ses dérivés, et éventuellement supportée par un feuillard d'aluminium. À titre d'exemple, on peut citer les couples d'électrodes positive et négative suivants : LiMn₂O₄ / Li₃Fe₂(PO₄)₃, LiCoO₂ / Li₄Ti₅O₁₂, LiCoO₂ / LiTi₂(PO₄)₃, LiFePO₄ / Li₄Ti₅O₁₂, L₁₃V₂(PO₄)₃ / Li₄Ti₅O₁₂.

Les première et seconde électrodes sont séparées par une solution électrolytique finale. On entend par solution électrolytique "finale", la solution électrolytique présente dans l'accumulateur Lithium-Ion, après avoir réalisé une première charge de l'accumulateur Lithium-Ion contenant la solution électrolytique initiale. L'accumulateur Lithium-Ion contenant la solution électrolytique initiale est non-chargé c'est-à-dire n'a été soumis à aucune charge.

La solution électrolytique initiale ou finale est, de préférence, une solution aqueuse. La solution électrolytique initiale ou finale comporte, avantageusement, un sel dont le cation est au moins en partie l'ion lithium Li⁺ dissous dans un solvant ou un mélange de solvants. Le solvant est de préférence un solvant aqueux. On entend par solvant aqueux un solvant contenant majoritairement de l'eau.

Le sel doit, avantageusement, supporter la tension de fonctionnement de l'accumulateur Lithium-ion formé. Le sel de lithium peut être, classiquement, du nitrate de lithium, LiNO₃.

La première électrode est recouverte par une couche de passivation. La couche de passivation est remarquable en ce qu'elle comporte un composé constitué par la répétition d'un motif de formule (7) suivant : 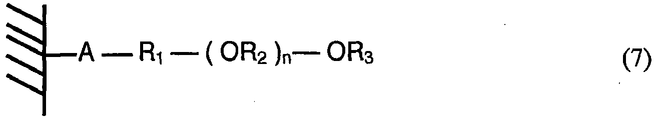 dans laquelle
n est un entier compris entre 1 et 10, de préférence entre 1 et 4,
R₁ est choisi parmi le groupe constitué par -CH₂-, une chaîne alkyle comprenant, de préférence, de 1 à 6 atomes de carbone, linéaire ou ramifiée, cyclique ou acyclique,
R₂ est choisi parmi le groupe constitué par -CH₂-, une chaîne alkyle comprenant, de préférence, de 2 à 6 atomes de carbone, linéaire ou ramifiée, cyclique ou acyclique, par exemple, un groupement méthylène-, éthylène-, n-propylène-, iso-propylène-, n-butylène-, tert-butylène-, sec-butylène- ou n-pentylène-,
R₃ est choisi parmi le groupe constitué par -CH₃, une chaîne alkyle comprenant, de préférence, de 2 à 6 atomes de carbone, linéaire ou ramifiée, cyclique ou acyclique et un groupement de formule (8) suivante : 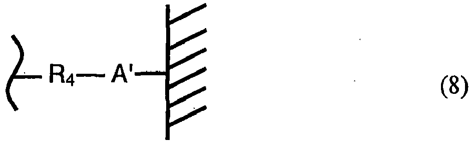 dans laquelle
A' est un groupement hydrocarboné aromatique, mono ou polycyclique, choisi parmi le groupe constitué par le phényle, les groupements aryles, les groupements polyaromatiques condensés, éventuellement substitués,
R₄ est choisi parmi le groupe constitué par -CH₂-, une chaîne alkyle comprenant, de préférence, de 2 à 8 atomes de carbone, linéaire ou ramifiée, cyclique ou acyclique et,

A est identique ou différent de A' et représente un groupement hydrocarboné aromatique, mono ou polycyclique, choisi parmi le groupe constitué par le phényle, les groupements aryles, les groupements polyaromatiques condensés, éventuellement substitués.

Lorsque A et/ou A' est un groupement aryle, on choisira de préférence un groupement aryle comprenant de 6 à 9 atomes de carbone, par exemple, un groupement phényle, tolyle, xylyle, triméthyl-phényle ou tétraméthyl-phényle.

Lorsque A et/ou A' est un groupement polyaromatique condensé, on choisira, de préférence, un groupement polyaromatique comprenant de 10 à 45 atomes de carbone, éventuellement, substitués par un ou plusieurs groupements choisis parmi le groupe constitué par -H, -CH3, un halogénure, une chaîne alkyle, linéaire ou ramifiée, comprenant de 2 à 8 atomes de carbone et, éventuellement, un ou plusieurs hétéroatomes choisi(s) parmi O, S et N.

Le motif est dépourvu de fonctions hydroxyle pour former une barrière à l'entrée de l'eau et comporte au moins une chaîne polyéther favorisant les interactions entre le film de passivation formé sur la première électrode et le cation, de préférence Li⁺, présent dans la solution électrolytique finale. Dans les formules 7, 8 et 9, il convient de signaler que la partie hachurée correspond à la surface de l'électrode.

En outre, le motif est greffé sur la première électrode par le groupement A et lorsque R₃ est un groupement de formule (8), par les deux groupements A et A'.

Le motif est greffé au matériau de la première électrode par l'intermédiaire d'un cycle hydrocarboné aromatique du groupement A et, lorsque R₃ est un groupement de formule (8), par un cycle hydrocarboné aromatique de chacun des groupements A et A', la liaison reliant la première électrode et le motif étant une liaison covalente de type C-aromatique / métal ou C- aromatique /carbone.

La présence d'une chaîne polyéther a un effet solvatant des ions lithium Li⁺ important qui favorise le passage des ions lithium au travers de la couche de passivation, pour s'insérer dans la première électrode. Les cinétiques des réactions d'insertion et de désinsertion des ions Li⁺ dans le matériau de la première électrode ne sont pas, par conséquent, significativement ralenties.

Par ailleurs, les cycles aromatiques apolaires des motifs créent une zone hydrophobe à proximité de la surface de la première électrode. Cette zone hydrophobe limite l'approche de l'eau ou, avantageusement, peut empêcher l'eau d'atteindre la première électrode. La réaction de réduction de l'eau qui affecte, en particulier, les performances d'un accumulateur Lithium-Ion à électrolyte aqueux est alors fortement limitée voire totalement supprimée, au potentiel de fonctionnement de la première électrode grâce à la présence de cette couche de passivation.

On choisira, par conséquent, de préférence des chaînes polyéthers aptes à solvater les cations de la solution électrolytique finale, par exemple, les ions Li⁺. En particulier, on choisira une chaîne polyéther ayant une conformation appropriée et/ou un nombre de fonction éther suffisant de manière à solvater les ions Li⁺ et/ou à créer une circulation sélective des ions Li⁺ à travers la couche de passivation, discriminante à l'encontre de l'eau.

Selon un mode de réalisation particulier préférentiel, dans les formules (7) et (8), R₁ et R₄ sont identiques et chacun des R₁ et R₄ peut, par exemple, représenter un groupement -CH₂-, pour obtenir une chaîne polyéther en position benzylique.

Selon un autre mode de réalisation particulier préférentiel, le motif peut former une structure en pont à la surface de la première électrode. Dans la formule (7), R₃ est, avantageusement, un groupement de formule (8). La structure en pont à la surface de la première électrode permet d'orienter la chaîne polyéther polaire, aprotique, vers la solution électrolytique finale de l'accumulateur Lithium-Ion, chargé.

A et A' peuvent être identiques ou différents et choisis parmi les groupements phényles, anthracényle et naphtalényle, éventuellement substitués, de préférence, par un ou plusieurs groupements choisi(s) parmi le groupe constitué par -H, -CH₃, un halogénure, une chaîne alkyle, linéaire ou ramifié, comprenant de 2 et 8 atomes de carbone et, éventuellement, un ou plusieurs hétéroatomes choisi(s) parmi O, S et N.

Le motif de la couche de passivation, peut avantageusement, être représenté par la formule générale (9) suivante : 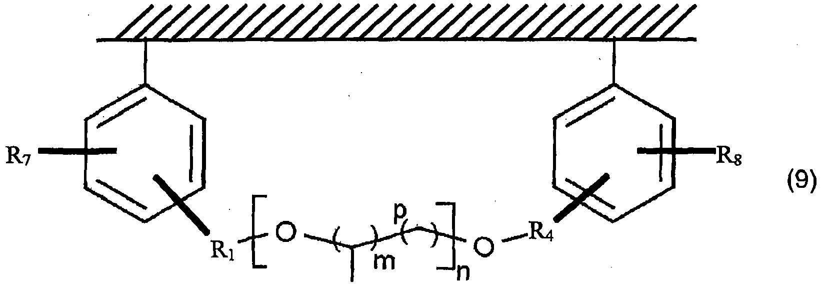 dans laquelle :
n est un entier compris entre 1 et 10, de préférence entre 1 et 4,
m est égal à 0 ou 1,
p est un entier compris entre 1 et 5, avantageusement égal à 2,
R₁ et R₄ sont identiques ou différents et choisis indépendamment parmi le groupe constitué par -CH₂-, une chaîne alkyle comprenant, de préférence, de 1 à 6 atomes de carbone, linéaire ou ramifiée, cyclique ou acyclique,
R₇ et R₈ sont identiques ou différents et choisis indépendamment parmi le groupe constitué par -H, -CH₃, un halogénure, une chaîne alkyle comprenant, de préférence, de 2 à 8 atomes de carbone, linéaire ou ramifié, contenant éventuellement un ou plusieurs hétéroatomes avantageusement choisi(s) parmi O, S et N.

En particulier, le motif de la couche de passivation est représenté par la formule générale (10) suivante : 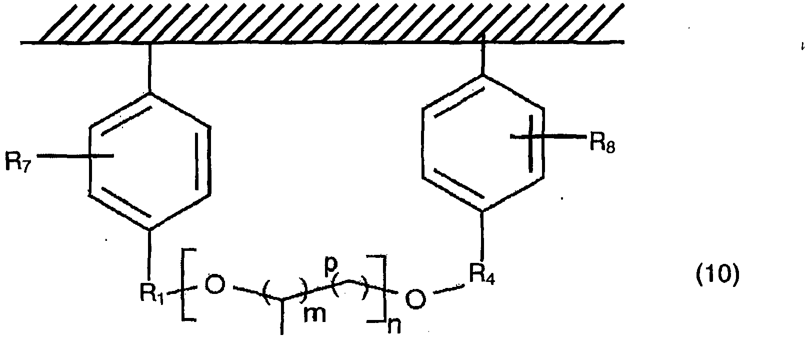 dans laquelle :
n est un entier compris entre 1 et 10, de préférence entre 1 et 4,
m est égal à 0 ou 1,
p est un entier compris entre 1 et 5, avantageusement égal à 2,
R₁ et R₄ sont identiques ou différents et choisis indépendamment parmi le groupe constitué par -CH₂-, une chaîne alkyle comprenant, de préférence, de 1 à 6 atomes de carbone, linéaire ou ramifiée, cyclique ou acyclique,
R₇ et R₈ sont identiques ou différents et choisis indépendamment parmi le groupe constitué par -H, -CH₃, un halogénure, une chaîne alkyle comprenant, de préférence, de 2 à 8 atomes de carbone, linéaire ou ramifié, contenant éventuellement un ou plusieurs hétéroatomes avantageusement choisi(s) parmi O, S et N.
R₇ et R₈ sont, de préférence, identiques et représentent un atome hydrogène, -H.

Selon un mode de réalisation particulier, un procédé de réalisation d'un accumulateur Lithium-Ion comporte une étape de formation, selon tout procédé connu, d'une cellule électrochimique comportant les première et seconde électrodes séparées par une solution électrolytique initiale.

La solution électrolytique initiale comporte un sel de diazonium dépourvu de fonctions hydroxyle et de formule générale (11) suivante :

X⁻ +N≡N-A-R₁- ( OR₂ )ₙ-OR₃ (11)

dans laquelle
n est un entier compris entre 1 et 10, de préférence entre 1 et 4,
X⁻ représente un contre-ion du cation diazonium choisi parmi les halogénures, BF₄⁻, NO₃⁻, HSO₄⁻, PF₆⁻, CH₃COO⁻, N(SO₂CF₃)₂⁻, CF₃SO₃⁻, CH₃SO₃⁻, CF₃COO⁻, (CH₃O)(H)PO₂⁻, N(CN)₂⁻,
R₁ et R₂ sont identiques ou différents et choisis indépendamment parmi le groupe constitué par -CH₂-, une chaîne alkyle comprenant, de préférence, de 1 à 6 atomes de carbone, linéaire ou ramifiée, cyclique ou acyclique,
R₃ est choisi parmi le groupe constitué par -CH₃, une chaîne alkyle comprenant, de préférence, de 2 à 6 atomes de carbone, linéaire ou ramifiée, cyclique ou acyclique et un groupement de formule (12) suivante : 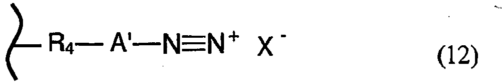 dans laquelle
A' est un groupement hydrocarboné aromatique, mono ou polycyclique, choisi parmi le groupe constitué par le phényle, les groupements aryles, les groupements polyaromatiques condensés, éventuellement substitués,
R₄ est choisi parmi le groupe constitué par -CH₂-, une chaîne alkyle comprenant, de préférence, de 2 à 8 atomes de carbone, linéaire ou ramifiée, cyclique ou acyclique et,

A est identique ou différent de A' et représente un groupement hydrocarboné aromatique, mono ou polycyclique, choisi parmi le groupe constitué par le phényle, les groupements aryles, les groupements polyaromatiques condensés, éventuellement substitués.

Lorsque A et/ou A' est un groupement aryle, on choisira de préférence un groupement aryle comprenant de 6 à 9 atomes de carbone, par exemple, un groupement phényle, tolyle, xylyle, triméthyl-phényle.

Lorsque A et/ou A' est un groupement polyaromatique condensé, on choisira, de préférence, un groupement polyaromatique comprenant de 10 à 45 atomes de carbone, éventuellement, substitués par un ou plusieurs groupements choisis parmi le groupe constitué par -H, -CH3, un halogénure, une chaîne alkyle, linéaire ou ramifiée, comprenant de 2 à 8 atomes de carbone et, éventuellement, un ou plusieurs hétéroatomes choisi(s) parmi O, S et N.

La première étape d'assemblage de la cellule électrochimique permet, avantageusement, de réaliser un accumulateur Lithium-ion, non chargé, formant la cellule électrochimique.

La première électrode est, de préférence, l'électrode négative où a lieu la réaction de réduction de l'eau.

L'étape d'assemblage de la cellule électrochimique est suivie d'une étape de formation de la couche de passivation sur la première électrode de la cellule électrochimique, par réduction électrochimique de la solution électrolytique initiale.

Les groupements A et A' sont, de préférence, choisis pour leurs propriétés de stabilité notamment électrochimique au potentiel de réduction du sel de diazonium. Les groupements A et A' ne contiennent, par exemple, pas de fonctions nitro, amine ou esters dans leur structure. De même, le ou les cycles hydrocarbonés aromatiques de A et A' ne sont avantageusement pas substitués, pour éviter des problèmes d'encombrement stérique pouvant affecter le rendement de greffage du sel de diazonium sur la première électrode.

L'étape de réduction électrochimique permet de former *in situ* la couche de passivation sur la première électrode, lors d'une première charge de la cellule de l'accumulateur Lithium-ion.

Pour ce faire, l'accumulateur Lithium-on, non-chargé, formé à l'issue de la première étape du procédé est soumis à une tension de fonctionnement lors de la première charge de l'accumulateur Lithium-Ion, selon tout procédé connu.

La première charge permet à la fois l'insertion du lithium dans le matériau de la première électrode et la réduction du sel de diazonium présent dans la solution électrolytique initiale. La première charge réalise le greffage d'au moins un cycle hydrocarboné aromatique du groupement A et/ou A'du sel de diazonium de formule (11) sur la première électrode. Le sel de diazonium est consommé lors de la première charge proportionnellement à la création de la couche de passivation sur la première électrode.

L'étape de formation de la couche de passivation comporte, de préférence, la création d'une liaison covalente de type C-aryle/métal ou C-aryle/carbone entre un cycle hydrocarboné aromatique du groupement A et le matériau de la première électrode et un cycle hydrocarboné aromatique du groupement A' et le matériau de la première électrode, lorsque R₃ est un groupement de formule (8) dans le motif constituant la couche de passivation.

Après la première charge, l'accumulateur Lithium-ion comporte la première électrode recouverte par la couche de passivation décrite ci-dessus et une solution électrolytique finale séparant les première et seconde électrodes.

À l'issue de la première charge, la totalité du sel de diazonium a, de préférence, été consommée et la solution électrolytique finale est alors dépourvue du sel de diazonium.

La concentration en sel de diazonium dans la solution électrolytique initiale ainsi que les paramètres de la première charge, notamment, la durée et la tension appliquée interviennent sur les caractéristiques de la couche de passivation, notamment, sur l'épaisseur de la couche formée et le taux de recouvrement.

Le sel de diazonium peut, avantageusement, être présent dans la solution électrolytique initiale à une concentration molaire inférieure à 0,5M, de préférence comprise entre 0,05M et 0,3M.

### EXEMPLE II

La passivation d'une électrode de LiFePO₄ passivée par réduction électrochimique d'une solution électrolytique initiale aqueuse a été réalisée par voltammétrie cyclique. On entend par "passivation" le fait que l'électrode est recouverte par une couche de passivation telle que décrite ci-dessus.

La solution électrolytique initiale est constituée par 10mL d'une solution aqueuse d'un sel de LiNO₃ à une concentration de 5M et d'un sel de tétrafluoroborate de bis(4-diazoniumbenzyl)-trioxyéthylène, noté DS3, tel que synthétisé dans l'exemple 1, à une concentration de 2mM.

L'électrode LiFePO₄ est réalisée sur un collecteur de courant selon tout procédé connu. À titre d'exemple, une encre est constituée par un mélange de LiFePO₄ formant le matériau d'insertion, du carbone formant un additif conducteur et des liants polymères formant un liant. L'encre est enduite sur un collecteur, par exemple en nickel puis séchée pour former l'électrode LiFePO₄. L'électrode LiFePO₄ est ensuite calandrée et découpée, pour être utilisée dans un montage classique de voltammétrie cyclique.

La voltammétrie cyclique a été réalisée selon un montage classique sous argon avec la solution électrolytique initiale décrite ci-dessus et trois électrodes dont l'électrode LiFePO₄ telle que décrite ci-dessus, notée D₁, constituant une électrode de travail, une électrode au calomel saturée constituant l'électrode de référence et un fil de platine, pour la contre-électrode.

Des mesures comparatives ont, également, été réalisées sur deux autres électrodes LiFePO₄. L'une notée D₂ est une électrode LiFePO₄ passivée selon le même protocole opératoire que précédemment mais avec un sel de tétrafluoroborate 4-méthoxybenzènediazonium, noté S₂, commercialisé par la société Sigma-Aldrich, et l'autre, notée D₀, est une électrode LiFePO₄ nue c'est-à-dire dépourvue de couche de passivation obtenue selon le même protocole mais sans ajout de sel de diazonium dans la solution électrolytique initiale.

Des spectres infrarouges (IR) ont été réalisés à l'issue de la voltammétrie sur les électrodes D₁ et D₂, pour confirmer la formation de la couche de passivation en vérifiant que les sels d'aryle diazonium DS3 et S₂ ont bien été greffés, respectivement, sur D₁ et D₂.

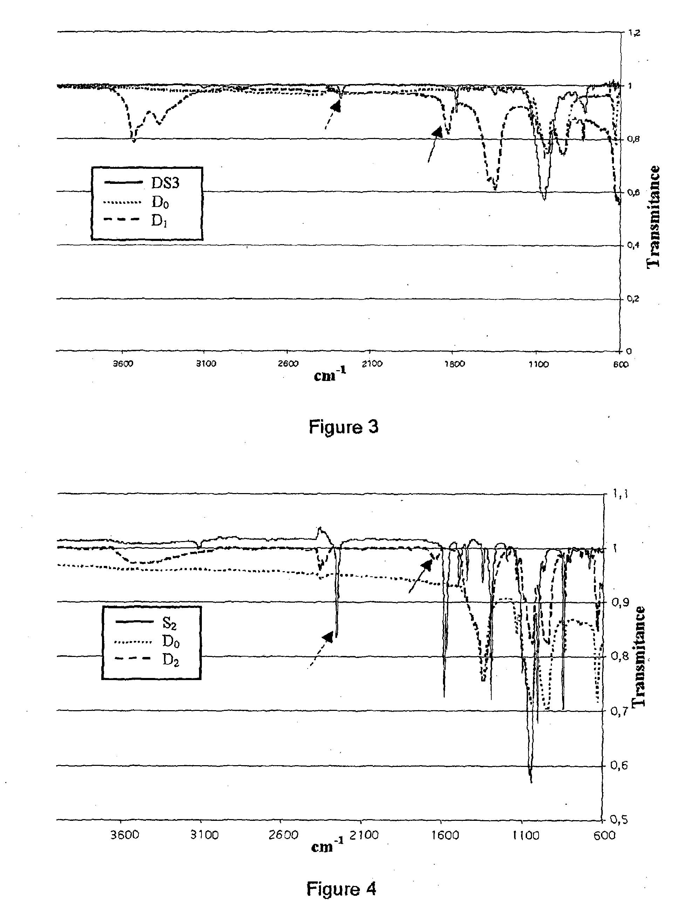

Les spectres IR représentés sur la figure 3 ont été obtenus par une méthode de Réflexion Totale Atténuée (notée ATR) sur le sel de diazonium DS3 seul et sur les électrodes D₀ et D₁. L'analyse du spectre de D₁ comparativement aux spectres de DS3 et D₀ montre, effectivement, la disparition d'un pic situé vers 2200 cm⁻¹ caractéristique de la fonction diazonium (flèche en pointillés à la figure 3) et l'apparition d'un pic vers 1600 cm⁻¹ caractéristique d'un cycle aromatique substitué par une chaîne alkyle (flèche pleine à la figure 3).

La même constatation peut être faite en analysant les spectres ATR représentés à la figure 4 du sel S₂ seul et des électrodes D₀ et D₂. L'analyse du spectre de D₂ comparativement aux spectres S₂ et D₀ montre, effectivement, la disparition du pic situé vers 2200 cm⁻¹ (flèche en pointillés à la figure 4) et l'apparition du pic vers 1600 cm⁻¹ (flèche pleine à la figure 4).

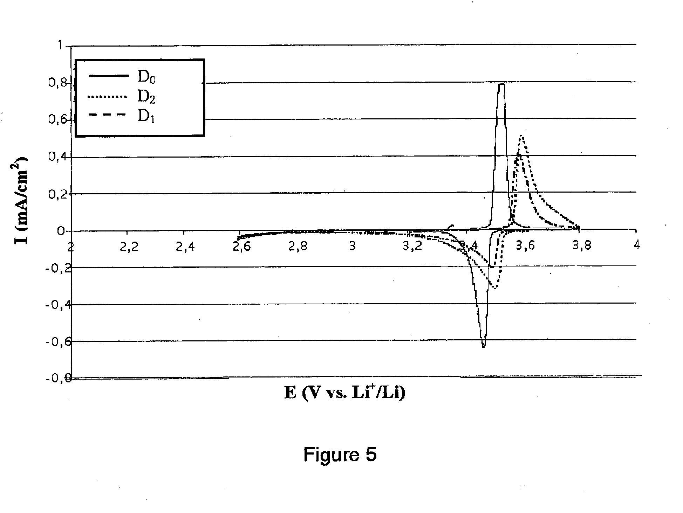

Les mesures en voltammétrie réalisées avec une vitesse de balayage de 0,01mV.s⁻¹ sur D₀, D₁ et D₂ sont représentées sur la figure 5. Pour les trois électrodes D₀, D₁ et D₂, les courbes obtenues présentent des pics symétriques, d'insertion et de désinsertion du lithium, caractéristiques des systèmes réversibles. On constate cependant que la différence de potentiel entre les deux pics d'insertion et de désinsertion est plus petite pour D₁ que pour D₂. En effet, on obtient une différence de potentiel de l'ordre de 90 mV pour D₁ qui est proche de la valeur obtenue pour l'électrode nue D₀, contre 110mV pour D₂.

D'autres mesures comparatives ont, également, été réalisées sur des électrodes de carbone vitreux afin de quantifier les surtensions obtenues pour chaque diazonium. Les électrodes C₁, C₂, C₃, C₄, C₅ et C₆ ont été passivées selon le même protocole opératoire que pour une électrode de LiFePO₄, respectivement avec S2, DS2, DS3, DS5, DS6 et DS7. L'électrode C0 est l'électrode non passivée.

Les valeurs de courant obtenues sur le balayage "aller" de la voltammétrie pour un potentiel de 1,8 V vs. Li/Li⁺ et la surtension obtenue, par rapport à l'électrode nue, pour une densité de courant de -0,05 mA/cm² ont été mesurées avec les différentes électrodes. Les résultats sont répertoriés dans le tableau II suivant :

**TABLEAU II**

| **Référence de l'électrode** | **D₀** | **C₁** | **C₂** | **C₃** | **C₄** | **C₅** | **C₆** |
|---|---|---|---|---|---|---|---|
| **I (mA/cm²) pour E = 1,8 V** | **-2,90** | **-0,33** | **-0,38** | **-0,68** | **-0,54** | **-0,54** | **-0,54** |
| Δ**E (mV) pour I = -0,05 mA/cm²** | **0** | **215** | **160** | **5** | **110** | **290** | **180** |

Les essais comparatifs témoignent de l'amélioration de la stabilité électrochimique de l'électrolyte aqueux selon l'invention. On constate, en outre, l'obtention de résultats particulièrement intéressants pour C₅, avec une surtension élevée de 290mV et un faible courant.

Les générateurs électrochimiques selon l'invention, en particulier, les accumulateurs Lithium-Ion présentent des performances améliorées, supérieures à celles des générateurs électrochimiques conventionnels. Contrairement aux générateurs électrochimiques à électrolyte aqueux de l'art antérieur, le générateur électrochimique selon l'invention est stable pour des tensions de fonctionnement élevées et peut être réalisé par un procédé facile à mettre en oeuvre et peu coûteux.

## Revendications

1. Générateur électrochimique comportant des première et seconde électrodes séparées par une solution électrolytique, ladite première électrode étant recouverte par une couche de passivation, **caractérisé en ce que** la couche de passivation comporte un composé constitué par la répétition d'un motif de formule (7) suivant : 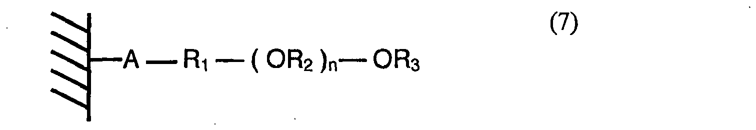 dans laquelle
n est un entier compris entre 1 et 10,
R₁ et R₂ sont identiques ou différents et choisis indépendamment parmi le groupe constitué par -CH₂-, une chaîne alkyle, linéaire ou ramifiée, cyclique ou acyclique,
R₃ est choisi parmi le groupe constitué par -CH₃, une chaîne alkyle, linéaire ou ramifiée, cyclique ou acyclique et un groupement de formule (8) suivante : 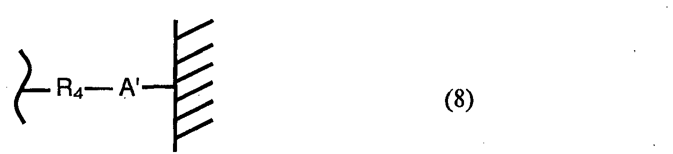 dans laquelle
A' est un groupement hydrocarboné aromatique, mono ou polycyclique, choisi parmi le groupe constitué par le phényle, les groupements aryles, les groupements polyaromatiques condensés, éventuellement substitués,
R₄ est choisi parmi le groupe constitué par -CH₂-, une chaîne alkyle, linéaire ou ramifiée, cyclique ou acyclique et,
A est identique ou différent de A' et représente un groupement hydrocarboné aromatique, mono ou polycyclique, choisi parmi le groupe constitué par le phényle, les groupements aryles, les groupements polyaromatiques condensés, éventuellement substitués,
ledit motif étant dépourvu de fonctions hydroxyle et greffé sur ladite première électrode par le groupement A et lorsque R₃ est un groupement de formule (8), par les groupements A et A'.

2. Générateur électrochimique selon la revendication 1, **caractérisé en ce que** :
- R₁ est choisi parmi le groupe constitué par -CH₂-, une chaîne alkyle comprenant de 1 à 6 atomes de carbone, linéaire ou ramifiée, cyclique ou acyclique,
- R₂ est choisi parmi le groupe constitué par -CH₂-, une chaîne alkyle comprenant de 2 à 6 atomes de carbone, linéaire ou ramifiée, cyclique ou acyclique,
- R₃ est choisi parmi le groupe constitué par -CH₃, une chaîne alkyle comprenant de 2 à 6 atomes de carbone, linéaire ou ramifiée, cyclique ou acyclique et un groupement de formule (8) suivante : 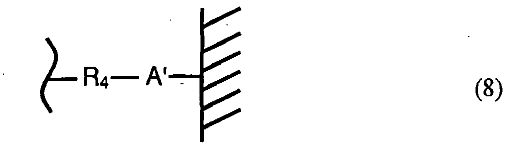 dans laquelle
A' est un groupement hydrocarboné aromatique, mono ou polycyclique, choisi parmi le groupe constitué par le phényle, les groupements aryles comprenant de 6 à 9 atomes de carbone, les groupements polyaromatiques condensés comprenant de 10 et 45 atomes de carbone, éventuellement substitués par un ou plusieurs groupements choisis parmi le groupe constitué par -H, -CH₃, un halogénure, une chaîne alkyle, linéaire ou ramifié, comprenant de 2 et 8 atomes de carbone et, éventuellement, un ou plusieurs hétéroatomes choisi(s) parmi O, S et N.
R₄ est choisi parmi le groupe constitué par -CH₂-, une chaîne alkyle comprenant de 2 à 8 atomes de carbone, linéaire ou ramifiée, cyclique ou acyclique et,
- A est identique ou différent de A' et représente un groupement hydrocarboné aromatique, mono ou polycyclique, choisi parmi le groupe constitué par le phényle, les groupements aryles comprenant de 6 à 9 atomes de carbone, les groupements polyaromatiques condensés comprenant de 10 et 45 atomes de carbone, éventuellement substitués par un ou plusieurs groupements choisis parmi le groupe constitué par -H, -CH₃, un halogénure, une chaîne alkyle, linéaire ou ramifiée, comprenant de 2 à 8 atomes de carbone et, éventuellement, un ou plusieurs hétéroatomes choisi(s) parmi O, S et N.
ledit motif étant dépourvu de fonctions hydroxyle et greffé sur ladite première électrode par le groupement A et lorsque R₃ est un groupement de formule (8), par les groupements A et A'.

3. Générateur électrochimique selon l'une des revendications 1 et 2, **caractérisé en ce que** la solution électrolytique est une solution aqueuse.

4. Générateur électrochimique selon l'une quelconque des revendications 1 à 3, **caractérisé en ce que** la première électrode est constituée par un matériau choisi parmi les métaux et leurs alliages, le carbone, les semi-conducteurs et les matériaux d'insertion du lithium et **en ce que** le motif est greffé au matériau de la première électrode par l'intermédiaire d'un cycle aromatique du groupement A et, lorsque R₃ est un groupement de formule (8), par un cycle aromatique de chacun des groupements A et A', la liaison reliant la première électrode et le motif étant une liaison covalente de type C-aromatique / métal ou C- aromatique /carbone.

5. Générateur électrochimique selon l'une quelconque des revendications 1 à 4, **caractérisé en ce que** R₃ est un groupement de formule (8) et **en ce que** le motif forme une structure en pont à la surface de la première électrode.

6. Générateur électrochimique selon l'une quelconque des revendications 1 à 5, **caractérisé en ce que** R₂ est un groupement choisi parmi le groupe constitué par un groupement méthylène-, éthylène-, n-propylène-, iso-propylène-, n-butylène-, tert-butylène-, sec-butylène- et n-pentylène-.

7. Générateur électrochimique selon l'une quelconque des revendications 1 à 6, **caractérisé en ce que** chacun des R₁ et R₄ représente un groupement
-CH₂-.

8. Générateur électrochimique selon l'une quelconque des revendications 1 à 7, **caractérisé en ce que** A et A' sont identiques ou différents et choisis parmi les groupements phényles, anthracényle et naphtalényle, éventuellement substitués.

9. Générateur électrochimique selon la revendication 8, **caractérisé en ce que** A et A' sont identiques ou différents et choisis parmi les groupements phényles, anthracényle et naphtalényle, éventuellement substitués par un ou plusieurs groupements choisi(s) parmi le groupe constitué par -H, -CH₃, un halogénure, une chaîne alkyle, linéaire ou ramifié, comprenant de 2 et 8 atomes de carbone et, éventuellement, un ou plusieurs hétéroatomes choisi(s) parmi O, S et N.

10. Générateur électrochimique selon l'une quelconque des revendications 1 à 9, **caractérisé en ce que** le motif de la couche de passivation est représenté par la formule générale (9) suivante : 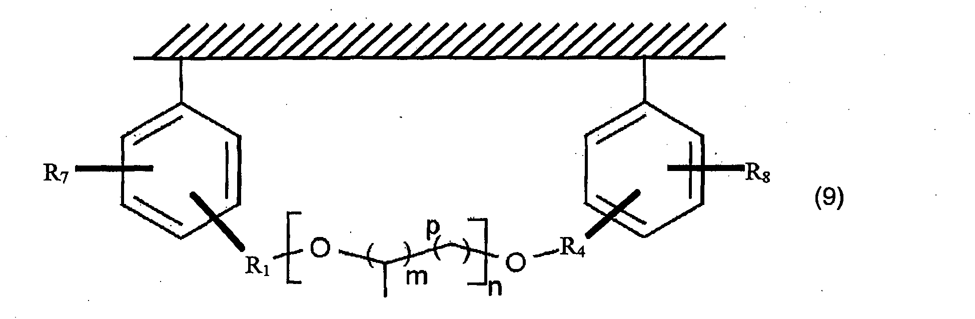 dans laquelle :
n est un entier compris entre 1 et 10,
m est égal à 0 ou 1,
p est un entier compris entre 1 et 5,
R₁ et R₄ sont identiques ou différents et choisis indépendamment parmi le groupe constitué par -CH₂-, une chaîne alkyle, linéaire ou ramifiée, cyclique ou acyclique,
R₇ et R₈ sont identiques ou différents et choisis indépendamment parmi le groupe constitué par -H, -CH₃, un halogénure, une chaîne alkyle, linéaire ou ramifié, contenant éventuellement un ou plusieurs hétéroatomes.

11. Générateur électrochimique selon la revendication 10, **caractérisé en ce que** :
- R₁ et R₄ sont identiques ou différents et choisis indépendamment parmi le groupe constitué par -CH₂-, une chaîne alkyle comprenant de 1 à 6 atomes de carbone, linéaire ou ramifiée, cyclique ou acyclique,
- R₇ et R₈ sont identiques ou différents et choisis indépendamment parmi le groupe constitué par -H, -CH₃, un halogénure, une chaîne alkyle comprenant de 2 à 8 atomes de carbone, linéaire ou ramifié, contenant éventuellement un ou plusieurs hétéroatomes choisi(s) parmi O, S et N.

12. Générateur électrochimique selon l'une quelconque des revendications 1 à 11, **caractérisé en ce que** le motif de la couche de passivation est représenté par la formule générale (10) suivante : 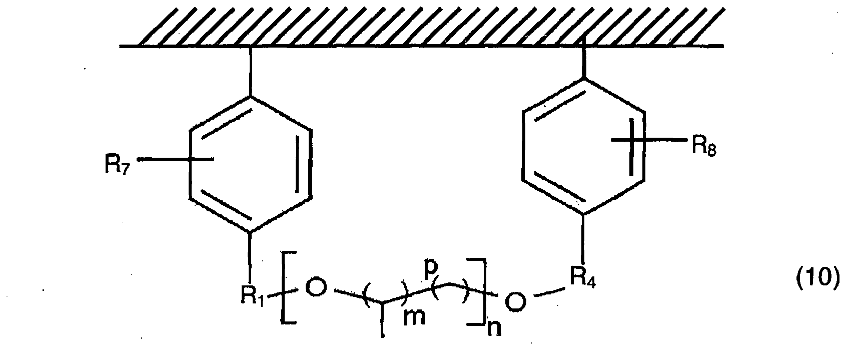 dans laquelle :
n est un entier compris entre 1 et 10,
m est égal à 0 ou 1,
p est un entier compris entre 1 et 5,
R₁ et R₄ sont identiques ou différents et choisis indépendamment parmi le groupe constitué par -CH₂-, une chaîne alkyle, linéaire ou ramifiée, cyclique ou acyclique,
R₇ et R₈ sont identiques ou différents et choisis indépendamment parmi le groupe constitué par -H, -CH₃ un halogénure, une chaîne alkyle, linéaire ou ramifié, contenant éventuellement un ou plusieurs hétéroatomes.

13. Générateur électrochimique selon la revendication 12, **caractérisé en ce que** :
- R₁ et R₄ sont identiques ou différents et choisis indépendamment parmi le groupe constitué par -CH₂-, une chaîne alkyle comprenant de 1 à 6 atomes de carbone, linéaire ou ramifiée, cyclique ou acyclique,
- R₇ et R₈ sont identiques ou différents et choisis indépendamment parmi le groupe constitué par -H, -CH₃ un halogénure, une chaîne alkyle comprenant de 2 à 8 atomes de carbone, linéaire ou ramifié, contenant éventuellement un ou plusieurs hétéroatomes choisi(s) parmi O, S et N.

14. Générateur électrochimique selon l'une quelconque des revendications 10 à 13, **caractérisé en ce que** R₇ et R₈ sont identiques et représentent un -H.

15. Générateur électrochimique selon l'une quelconque des revendications 1 et 14, **caractérisé en ce qu'**il est un accumulateur.

16. Générateur électrochimique selon l'une quelconque des revendications 1 et 14, **caractérisé en ce qu'**il est un super-condensateur.

17. Procédé de réalisation d'un générateur électrochimique selon l'une quelconque des revendications 1 à 16, **caractérisé en ce qu'**il comporte une étape de formation d'une couche de passivation sur une première électrode par réduction électrochimique d'une solution électrolytique initiale comportant un sel de diazonium dépourvu de fonctions hydroxyle et de formule générale (11) suivante :
X^{- +}N≡N-A-R₁-(OR₂)ₙ-OR₃ (11)
dans laquelle
n est un entier compris entre 1 et 10,
X⁻ représente un contre-ion du cation diazonium choisi parmi les halogénures, BF₄⁻, NO₃⁻, HSO₄⁻, PF₆⁻, CH₃COO⁻, N(SO₂CF₃)₂⁻, CF₃SO₃⁻, CH₃SO₃⁻, CF₃COO⁻, (CH₃O)(H)PO₂⁻,N(CN)₂⁻,
R₁ et R₂ sont identiques ou différents et choisis indépendamment parmi le groupe constitué par -CH₂-, une chaîne alkyle, linéaire ou ramifiée, cyclique ou acyclique,
R₃ est choisi parmi le groupe constitué par -CH₃, une chaîne alkyle, linéaire ou ramifiée, cyclique ou acyclique et un groupement de formule (12) suivante : 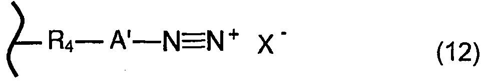 dans laquelle
A' est un groupement hydrocarboné aromatique, mono ou polycyclique, choisi parmi le groupe constitué par le phényle, les groupements aryles, les groupements polyaromatiques condensés, éventuellement substitués,
R₄ est choisi parmi le groupe constitué par -CH₂-, une chaîne alkyle, linéaire ou ramifiée, cyclique ou acyclique et,
A est identique ou différent de A' et représente un groupement hydrocarboné aromatique, mono ou polycyclique, choisi parmi le groupe constitué par le phényle, les groupements aryles, les groupements polyaromatiques condensés, éventuellement substitués.

18. Procédé selon la revendication 17, **caractérisé en ce qu'**il comporte les étapes successives suivantes :
- assemblage d'une cellule électrochimique comportant des première et seconde électrodes séparées par la solution électrolytique initiale et,
- formation *in situ* de la couche de passivation sur la première électrode lors d'une première charge de ladite cellule, ladite charge réduisant le sel de diazonium de la solution électrolytique initiale et réalisant le greffage d'au moins un cycle hydrocarboné aromatique du groupement A et/ou A' dudit sel sur la première électrode.

19. Procédé selon l'une des revendications 17 et 18, **caractérisé en ce que** la première électrode est constituée par un matériau choisi parmi les métaux et leurs alliages, le carbone, les semi-conducteurs et les matériaux d'insertion du lithium et **en ce que** l'étape de formation de la couche de passivation comporte la création d'une liaison covalente de type C-aryle/métal ou C-aryle/carbone entre :
- un cycle hydrocarboné aromatique du groupement A et le matériau de la première électrode et,
- un cycle hydrocarboné aromatique du groupement A' et le matériau de la première électrode, lorsque R₃ est un groupement de formule (8).

20. Procédé selon l'une quelconque des revendications 17 à 19, **caractérisé en ce que** le sel de diazonium est présent dans la solution électrolytique initiale à une concentration molaire inférieure à 0,5 M.

## Patentansprüche

1. Elektrochemischer Generator, umfassend eine erste und eine zweite Elektrode, die durch eine elektrolytische Lösung getrennt sind, wobei die erste Elektrode mit einer Passivierungsschicht überzogen ist, **dadurch gekennzeichnet, dass** die Passivierungsschicht eine Verbindung umfasst, die durch die Wiederholung einer Einheit der folgenden Formel (7) gebildet ist: 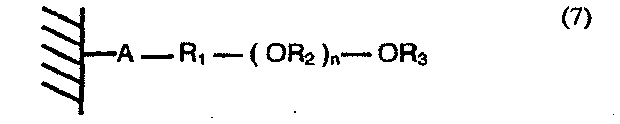 worin
n eine ganze Zahl zwischen 1 und 10 ist,
R₁ und R₂ identisch oder verschieden und unabhängig ausgewählt sind aus der Gruppe bestehend aus -CH₂-, einer linearen oder verzweigten, cyclischen oder acyclischen Alkylkette,
R₃ ausgewählt ist aus der Gruppe bestehend aus -CH₃, einer linearen oder verzweigten, cyclischen oder acyclischen Alkylkette und einer Gruppe der folgenden Formel (8): 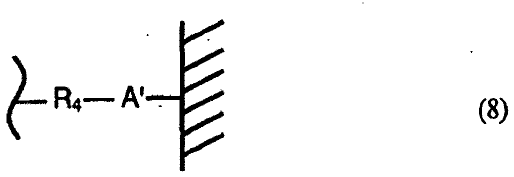 worin
A' eine aromatische, mono- oder polycyclische Kohlenwasserstoffgruppe ist, die ausgewählt ist aus der Gruppe bestehend aus Phenyl, den Arylgruppen, den kondensierten, eventuell substituierten polyaromatischen Gruppen,
R₄ ausgewählt ist aus der Gruppe bestehend aus -CH₂-, einer linearen oder verzweigten, cyclischen oder acyclischen Alkylkette und
A mit A' identisch oder hiervon verschieden ist und eine aromatische, mono- oder polycyclische Kohlenwasserstoffgruppe darstellt, die ausgewählt ist aus der Gruppe bestehend aus Phenyl, den Arylgruppen, den kondensierten, eventuell substituierten polyaromatischen Gruppen,
wobei die Einheit keine Hydroxylfunktionen aufweist und durch die Gruppe A und, wenn R₃ eine Gruppe der Formel (8) ist, durch die Gruppen A und A' auf die erste Elektrode gepfropft ist.

2. Elektrochemischer Generator nach Anspruch 1, **dadurch gekennzeichnet, dass**
- R₁ aus der Gruppe bestehend aus -CH₂-, einer linearen oder verzweigten, cyclischen oder acyclischen Alkylkette mit 1 bis 6 Kohlenstoffatomen ausgewählt ist,
- R₂ aus der Gruppe bestehend aus -CH₂-, einer linearen oder verzweigten, cyclischen oder acyclischen Alkylkette mit 2 bis 6 Kohlenstoffatomen ausgewählt ist,
- R₃ aus der Gruppe bestehend aus -CH₃, einer linearen oder verzweigten, cyclischen oder acyclischen Alkylkette mit 2 bis 6 Kohlenstoffatomen, und einer Gruppe der folgenden Formel (8) ausgewählt ist: 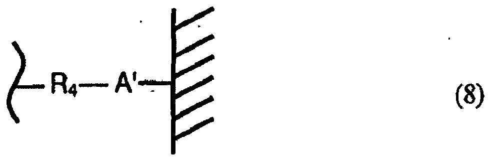 worin
A' eine aromatische, mono- oder polycyclische Kohlenwasserstoffgruppe ist, die ausgewählt ist aus der Gruppe bestehend aus Phenyl, den Arylgruppen mit 6 bis 9 Kohlenstoffatomen, den kondensierten polyaromatischen Gruppen mit 10 bis 45 Kohlenstoffatomen, eventuell substituiert durch eine oder mehrere Gruppen, die ausgewählt sind aus der Gruppe bestehend aus -H, -CH₃, einem Halogenid, einer linearen oder verzweigten Alkylkette mit 2 und 8 Kohlenstoffatomen und eventuell einem oder mehreren Heteroatomen, das (die) aus O, S und N ausgewählt ist (sind),
R₄ ausgewählt ist aus der Gruppe bestehend aus -CH₂-, einer linearen oder verzweigten, cyclischen oder acyclischen Alkylkette mit 2 bis 8 Kohlenstoffatomen, und
- A mit A' identisch oder hiervon verschieden ist und eine aromatische, mono- oder polycyclische Kohlenwasserstoffgruppe darstellt, die ausgewählt ist aus der Gruppe bestehend aus Phenyl, den Arylgruppen mit 6 bis 9 Kohlenstoffatomen, den kondensierten polyaromatischen Gruppen mit 10 bis 45 Kohlenstoffatomen, eventuell substituiert durch eine oder mehrere Gruppen, die ausgewählt sind aus der Gruppe bestehend aus -H, -CH₃, einem Halogenid, einer linearen oder verzweigten Alkylkette mit 2 bis 8 Kohlenstoffatomen und eventuell einem oder mehreren Heteroatomen, das (die) aus O, S und N ausgewählt ist (sind),
wobei die Einheit keine Hydroxylfunktionen aufweist und durch die Gruppe A und, wenn R₃ eine Gruppe der Formel (8) ist, durch die Gruppen A und A' auf die erste Elektrode gepfropft ist.

3. Elektrochemischer Generator nach einem der Ansprüche 1 und 2, **dadurch gekennzeichnet, dass** die elektrolytische Lösung eine wässrige Lösung ist.

4. Elektrochemischer Generator nach einem der Ansprüche 1 bis 3, **dadurch gekennzeichnet, dass** die erste Elektrode aus einem Material besteht, das aus den Metallen und ihren Legierungen, dem Kohlenstoff, den Halbleitern und den Lithiumeinlagerungsmaterialien ausgewählt ist, und dass die Einheit mittels eines aromatischen Rings der Gruppe A und, wenn R₃ eine Gruppe der Formel (8) ist, durch einen aromatischen Ring einer jeden der Gruppen A und A' auf das Material der ersten Elektrode gepfropft ist, wobei die die erste Elektrode und die Einheit verbindende Bindung eine kovalente Bindung vom Typ C-aromatisch / Metall oder C-aromatisch / Kohlenstoff ist.

5. Elektrochemischer Generator nach einem der Ansprüche 1 bis 4, **dadurch gekennzeichnet, dass** R₃ eine Gruppe der Formel (8) ist und das die Einheit eine Brückenstruktur an der Oberfläche der ersten Elektrode bildet.

6. Elektrochemischer Generator nach einem der Ansprüche 1 bis 5, **dadurch gekennzeichnet, dass** R₂ eine Gruppe ist, die aus der Gruppe bestehend aus einer Methylen-, Ethylen, n-Propylen-, iso-Propylen-, n-Butylen-, tert-Butylen-, sec-Butylen- und n-Pentylen-Gruppe ausgewählt ist.

7. Elektrochemischer Generator nach einem der Ansprüche 1 bis 6, **dadurch gekennzeichnet, dass** eine jede der R₁ und R₄ eine -CH₂-Gruppe repräsentiert.

8. Elektrochemischer Generator nach einem der Ansprüche 1 bis 7, **dadurch gekennzeichnet, dass** A und A' identisch oder verschieden und aus den Phenyl-, Anthracenyl- und Naphthalenyl-Gruppen, eventuell substituiert, ausgewählt sind.

9. Elektrochemischer Generator nach Anspruch 8, **dadurch gekennzeichnet, dass** A und A' identisch oder verschieden und ausgewählt sind aus den Phenyl-, Anthracenyl- und Naphthalenyl-Gruppen, eventuell substituiert durch eine oder mehrere Gruppen, die ausgewählt ist (sind) aus der Gruppe bestehend aus -H, -CH₃, einem Halogenid, einer linearen oder verzweigten Alkylkette mit 2 und 8 Kohlenstoffatomen und eventuell einem oder mehreren Heteroatomen, das (die) aus O, S und N ausgewählt ist (sind).

10. Elektrochemischer Generator nach einem der Ansprüche 1 bis 9, **dadurch gekennzeichnet, dass** die Einheit der Passivierungsschicht durch die folgende allgemeine Formel (9) dargestellt ist: 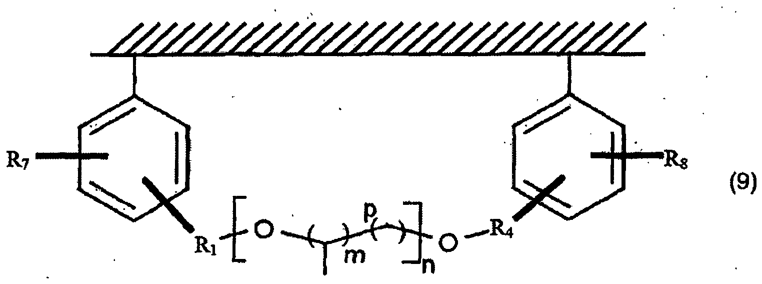 worin:
n eine ganze Zahl zwischen 1 und 10 ist,
m gleich 0 oder 1 ist,
p eine ganze Zahl zwischen 1 und 5 ist,
R₁ und R₄ identisch oder verschieden und unabhängig ausgewählt sind aus der Gruppe bestehend aus -CH₂-, einer linearen oder verzweigten, cyclischen oder acyclischen Alkylkette,
R₇ und R₈ identisch oder verschieden und unabhängig ausgewählt sind aus der Gruppe bestehend aus -H, -CH₃, einem Halogenid, einer linearen oder verzweigten Alkylkette, die eventuell ein oder mehrere Heteroatome enthält.

11. Elektrochemischer Generator nach Anspruch 10, **dadurch gekennzeichnet, dass**:
- R₁ und R₄ identisch oder verschieden und unabhängig ausgewählt sind aus der Gruppe bestehend aus -CH₂-, einer linearen oder verzweigten, cyclischen oder acyclischen Alkylkette mit 1 bis 6 Kohlenstoffatomen,
- R₇ und R₈ identisch oder verschieden und unabhängig ausgewählt sind aus der Gruppe bestehend aus -H, -CH₃, einem Halogenid, einer linearen oder verzweigten Alkylkette mit 2 bis 8 Kohlenstoffatomen, die eventuell ein oder mehrere Heteroatome ausgewählt aus O, S und N enthält.

12. Elektrochemischer Generator nach einem der Ansprüche 1 bis 11, **dadurch gekennzeichnet, dass** die Einheit der Passivierungsschicht durch die folgende allgemeine Formel (10) dargestellt ist: 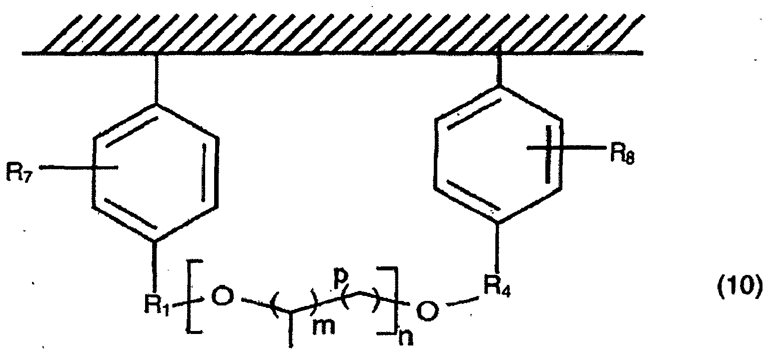 worin:
n eine ganze Zahl zwischen 1 und 10 ist,
m gleich 0 oder 1 ist,
p eine ganze Zahl zwischen 1 und 5 ist,
R₁ und R₄ identisch oder verschieden und unabhängig ausgewählt sind aus der Gruppe bestehend aus -CH₂-, einer linearen oder verzweigten, cyclischen oder acyclischen Alkylkette,
R₇ und R₈ identisch oder verschieden und unabhängig ausgewählt sind aus der Gruppe bestehend aus -H, -CH₃, einem Halogenid, einer linearen oder verzweigten Alkylkette, die eventuell ein oder mehrere Heteroatome enthält.

13. Elektrochemischer Generator nach Anspruch 12, **dadurch gekennzeichnet, dass**:
- R₁ und R₄ identisch oder verschieden und unabhängig ausgewählt sind aus der Gruppe bestehend aus -CH₂-, einer linearen oder verzweigten, cyclischen oder acyclischen Alkylkette mit 1 bis 6 Kohlenstoffatomen,
- R₇ und R₈ identisch oder verschieden und unabhängig ausgewählt sind aus der Gruppe bestehend aus -H, -CH₃, einem Halogenid, einer linearen oder verzweigten Alkylkette mit 2 bis 8 Kohlenstoffatomen, die eventuell ein oder mehrere Heteroatome ausgewählt aus O, S und N enthält.

14. Elektrochemischer Generator nach einem der Ansprüche 10 bis 13, **dadurch gekennzeichnet, dass** R₇ und R₈ identisch sind und ein -H repräsentieren.

15. Elektrochemischer Generator nach einem der Ansprüche 1 bis 14, **dadurch gekennzeichnet, dass** er ein Akkumulator ist.

16. Elektrochemischer Generator nach einem der Ansprüche 1 bis 14, **dadurch gekennzeichnet, dass** er ein Superkondensator ist.

17. Verfahren zur Herstellung eines elektrochemischen Generators nach einem der Ansprüche 1 bis 16, **dadurch gekennzeichnet, dass** es einen Schritt zum Ausbilden einer Passivierungsschicht auf einer ersten Elektrode durch elektrochemische Reduktion einer elektrolytischen Ausgangslösung mit einem Diazoniumsalz ohne Hydroxylfunktionen und der folgenden allgemeinen Formel (11) umfasst:
X^{- +}N≡N-A-R₁-(OR₂)ₙ-OR₃ (11)
worin
n eine ganze Zahl zwischen 1 und 10 ist,
X⁻ ein Gegenion des Diazonium-Kations repräsentiert, ausgewählt aus den Halogeniden, BF₄⁻, NO₃⁻, HSO₄⁻, PF₆⁻, CH₃COO⁻, N(SO₂CF₃)₂⁻, CF₃SO₃⁻, CH₃SO₃⁻, CF₃COO⁻, (CH₃O)(H)PO₂⁻, N(CN)₂⁻,
R₁ und R₂ identisch oder verschieden und unabhängig ausgewählt sind aus der Gruppe bestehend aus -CH₂-, einer linearen oder verzweigten, cyclischen oder acyclischen Alkylkette,
R₃ ausgewählt ist aus der Gruppe bestehend aus -CH₃, einer linearen oder verzweigten, cyclischen oder acyclischen Alkylkette und einer Gruppe der folgenden Formel (12): 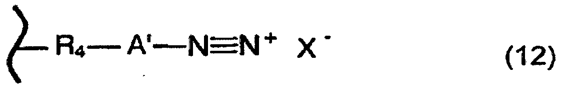 worin
A' eine aromatische, mono- oder polycyclische Kohlenwasserstoffgruppe ist, die ausgewählt ist aus der Gruppe bestehend aus Phenyl, den Arylgruppen, den kondensierten, eventuell substituierten polyaromatischen Gruppen,
R₄ ausgewählt ist aus der Gruppe bestehend aus -CH₂-, einer linearen oder verzweigten, cyclischen oder acyclischen Alkylkette und
A mit A' identisch oder hiervon verschieden ist und eine aromatische, mono- oder polycyclische Kohlenwasserstoffgruppe darstellt, die ausgewählt ist aus der Gruppe bestehend aus Phenyl, den Arylgruppen, den kondensierten, eventuell substituierten polyaromatischen Gruppen.

18. Verfahren nach Anspruch 17, **dadurch gekennzeichnet, dass** es die folgenden aufeinanderfolgenden Schritte umfasst:
- Zusammenfügen einer elektrochemischen Zelle, die eine erste und eine zweite Elektrode, welche durch die elektrolytische Ausgangslösung getrennt sind, umfasst, und
- *in situ* Bildung der Passivierungsschicht auf der ersten Elektrode bei einem ersten Laden der Zelle, wobei das Laden das Diazoniumsalz der elektrolytischen Ausgangslösung reduziert und das Pfropfen wenigstens eines aromatischen Kohlenwasserstoffrings der Gruppe A und/oder A' des Salzes auf die erste Elektrode vollzieht.

19. Verfahren nach einem der Ansprüche 17 und 18, **dadurch gekennzeichnet, dass** die erste Elektrode aus einem Material besteht, das aus den Metallen und ihren Legierungen, dem Kohlenstoff, den Halbleitern und den
Lithiumeinlagerungsmaterialien ausgewählt ist, und dass der Schritt des Ausbildens der Passivierungsschicht die Erzeugung einer kovalenten Bindung vom Typ C-Aryl/Metall oder C-Aryl/Kohlenstoff zwischen:
- einem aromatischen Kohlenwasserstoffring der Gruppe A und dem Material der ersten Elektrode und
- einem aromatischen Kohlenwasserstoffring der Gruppe A' und dem Material der ersten Elektrode, wenn R₃ eine Gruppe der Formel (8) ist,
umfasst.

20. Verfahren nach einem der Ansprüche 17 bis 19, **dadurch gekennzeichnet, dass** das Diazoniumsalz in der elektrolytischen Ausgangslösung in einer molaren Konzentration von weniger als 0,5 M vorhanden ist.

## Claims

1. An electrochemical generator comprising first and second electrodes separated by an electrolytic solution, said first electrode being covered by a passivation layer, **characterized in that** the passivation layer comprises a compound formed by repetition of a pattern of the following formula (7): 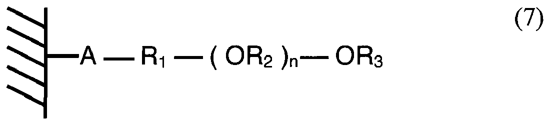 in which
n is an integer comprised between 1 and 10,
R₁ and R₂ are identical or different and chosen independently from the group formed by -CH₂-, a cyclic or acyclic, linear or branched alkyl chain,
R₃ is chosen from the group formed by -CH₃, a cyclic or acyclic, linear or branched alkyl chain and a group of the following formula (8): 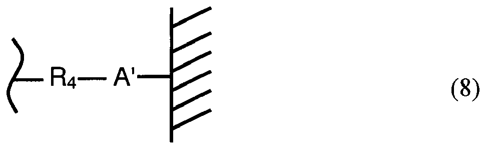 in which
A' is a mono or polycyclic, aromatic hydrocarbonated group chosen from the group formed by phenyl, aryl groups, condensed polyaromatic groups, which may be substituted,
R₄ is chosen from the group formed by -CH₂-, a cyclic or acyclic, linear or branched alkyl chain and,
A is identical to or different from A' and represents a mono or polycyclic, aromatic hydrocarbonated group chosen from the group formed by phenyl, aryl groups, condensed polyaromatic groups, which may be substituted,
said pattern being devoid of hydroxyl functions and grafted onto said first electrode by group A and, when R₃ is a group of formula (8), by groups A and A'.

2. The electrochemical generator according to claim 1, **characterized in that**:
- R₁ is chosen from the group formed by -CH₂-, a cyclic or acyclic, linear or branched alkyl chain preferably comprising from 1 to 6 carbon atoms,
- R₂ is chosen from the group formed by -CH₂-, a cyclic or acyclic, linear or branched alkyl chain preferably comprising from 2 to 6 carbon atoms,
- R₃ is chosen from the group formed by -CH₃, a cyclic or acyclic, linear or branched alkyl chain preferably comprising from 2 to 6 carbon atoms and a group of the following formula (8): 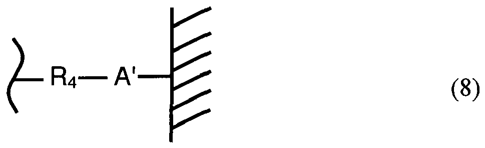 in which
A' is a mono or polycyclic, aromatic hydrocarbonated group chosen from the group formed by phenyl, aryl groups comprising from 6 to 9 carbon atoms, condensed polyaromatic groups comprising from 10 to 45 carbon atoms, which may be substituted by one or more groups chosen from the group formed by -H, -CH₃, a halogenide, a linear or branched alkyl chain comprising from 2 to 8 carbon atoms and, possibly one or more heteroatoms chosen from O, S and N.
R₄ is chosen from the group formed by -CH₂-, a cyclic or acyclic, linear or branched alkyl chain comprising from 2 to 8 carbon atoms, and
A is identical to or different from A' and represents a mono or polycyclic, aromatic hydrocarbonated group chosen from the group formed by phenyl, aryl groups comprising from 6 to 9 carbon atoms, condensed polyaromatic groups comprising from 10 to 45 carbon atoms, which may be substituted by one or more groups chosen from the group formed by -H, -CH₃, a halogenide, a linear or branched alkyl chain comprising from 2 to 8 carbon atoms and, possibly one or more heteroatoms chosen from O, S and N.
said pattern being devoid of hydroxyl functions and grafted onto said first electrode by group A and, when R₃ is a group of formula (8), by groups A and A'.

3. The electrochemical generator according to one of claims 1 and 2, **characterized in that** the electrolytic solution is an aqueous solution.

4. The electrochemical generator according to any one of claims 1 to 3, **characterized in that** the first electrode is formed by a material chosen from metals and their alloys, carbon, semiconductors and lithium insertion materials and **in that** the pattern is grafted onto the material of the first electrode by means of an aromatic cycle of group A and, when R₃ is a group of formula (8), by an aromatic cycle of each of the groups A and A', the bond linking the first electrode and the pattern being a covalent bond of C-aromatic / metal or C-aromatic / carbon type.

5. The electrochemical generator according to any one of claims 1 to 4, **characterized in that** R₃ is a group of formula (8) and **in that** the pattern forms a bridge structure at the surface of the first electrode.

6. The electrochemical generator according to any one of claims 1 to 5, **characterized in that** R₂ is a group chosen from the group formed by a methylene-, ethylene-, n-propylene-, iso-propylene-, n-butylene-, tert-butylene-, sec-butylene- and n-pentylene- group.

7. The electrochemical generator according to any one of claims 1 to 6, **characterized in that** each of R₁ and R₄ represents a -CH₂- group.

8. The electrochemical generator according to any one of claims 1 to 7, **characterized in that** A and A' are identical or different and chosen from the phenyl, anthracenyle and naphtalenyle groups, which may be substituted.

9. The electrochemical generator according to claim 8, **characterized in that** A and A' are identical or different and chosen from the phenyl, anthracenyle and naphtalenyle groups which may be substituted by one or more groups chosen from the group formed by -H, -CH₃, a halogenide, a linear or branched alkyl chain comprising from 2 to 8 carbon atoms, and possibly one or more heteroatoms chosen from O, S and N.

10. The electrochemical generator according to any one of claims 1 to 9, **characterized in that** the pattern of the passivation layer is represented by the following general formula (9): 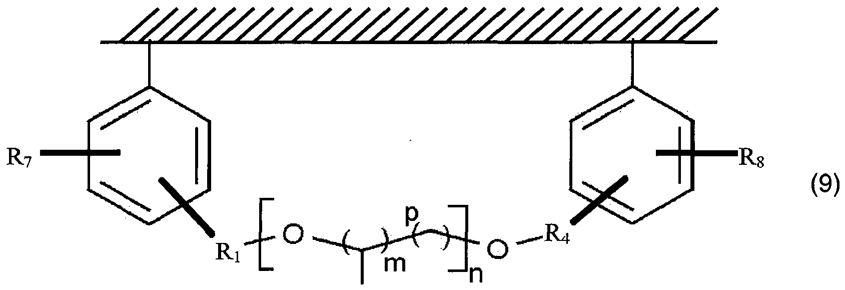 in which :
n is an integer comprised between 1 and 10,
m is equal to 0 or 1,
p is an integer comprised between 1 and 5,
R₁ and R₄ are identical or different and chosen independently from the group formed by -CH₂-, a cyclic or acyclic, linear or branched alkyl chain,
R₇ and R₈ are identical or different and chosen independently from the group formed by -H, -CH₃, a halogenide, a linear or branched alkyl chain, possibly containing one or more heteroatoms.

11. The electrochemical generator according to claim 10, **characterized in that**:
- R₁ and R₄ are identical or different and chosen independently from the group formed by -CH₂-, a cyclic or acyclic, linear or branched alkyl chain comprising from 1 to 6 carbon atoms,
- R₇ and R₈ are identical or different and chosen independently from the group formed by -H, -CH₃, a halogenide, linear or branched alkyl chain comprising from 2 to 8 carbon atoms, possibly containing one or more heteroatoms chosen from O, S and N.

12. The electrochemical generator according to any one of claims 1 to 11, **characterized in that** the pattern of the passivation layer is represented by the following general formula (10): 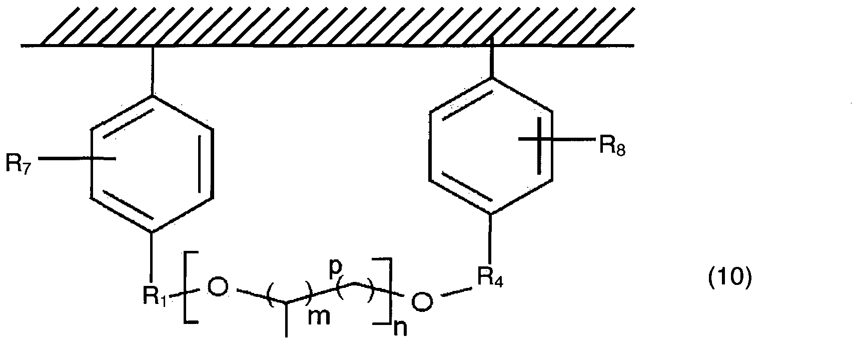 in which :
n is an integer comprised between 1 and 10,
m is equal to 0 or 1,
p is an integer comprised between 1 and 5,
R₁ and R₄ are identical or different and chosen independently from the group formed by -CH₂-, a cyclic or acyclic, linear or branched alkyl chain,
R₇ and R₈ are identical or different and chosen independently from the group formed by -H, -CH₃, a halogenide, a linear or branched alkyl chain, possibly containing one or more heteroatoms.

13. The electrochemical generator according to claim 12, **characterized in that**:
- R₁ and R₄ are identical or different and chosen independently from the group formed by -CH₂-, a cyclic or acyclic, linear or branched alkyl chain comprising from 1 to 6 carbon atoms,
- R₇ and R₈ are identical or different and chosen independently from the group formed by -H, -CH₃ a halogenide, linear or branched alkyl chain comprising from 2 to 8 carbon atoms, possibly containing one or more heteroatoms chosen from O, S and N.

14. The electrochemical generator according to any one of claims 10 to 13, **characterized in that** R₇ and R₈ are identical and represent a -H.

15. The electrochemical generator according to any one of claims 1 and 14, **characterized in that** it is a storage battery.

16. The electrochemical generator according to any one of claims 1 and 14, **characterized in that** it is a super-capacitor.

17. A method for producing an electrochemical generator according to any one of claims 1 to 16, **characterized in that** it comprises a formation step of a passivation layer on a first electrode by electrochemical reduction of an initial electrolytic solution comprising a diazonium salt devoid of hydroxyl functions and of the following general formula (11):
**X^{- +}N≡N-A-R₁-( OR₂)ₙ-OR₃** (11)
in which
n is an integer comprised between 1 and 10,
X⁻ represents a counter-ion of the diazonium cation chosen from the halogenides, BF₄⁻, NO₃⁻, HSO₄⁻, PF₆⁻, CH₃COO⁻, N(SO₂CF₃)₂⁻, CF₃SO₃⁻, CH₃SO₃⁻, CF₃COO⁻, (CH₃O)(H)PO₂⁻, N(CN)₂⁻,
R₁ and R₂ are identical or different and chosen independently from the group formed by -CH₂-, a cyclic or acyclic, linear or branched alkyl chain,
R₃ is chosen from the group formed by -CH₃, a cyclic or acyclic, linear or branched alkyl chain and a group of the following formula (12): 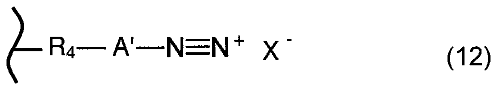 in which
A' is a mono or polycyclic, aromatic hydrocarbonated group chosen from the group formed by phenyl, aryl groups, condensed polyaromatic groups, which may be substituted,
R₄ is chosen from the group formed by -CH₂-, cyclic or acyclic, linear or branched alkyl chain, and
A is identical to or different from A' and represents a mono or polycyclic, aromatic hydrocarbonated group chosen from the group formed by phenyl, aryl groups, condensed polyaromatic groups, which may be substituted.

18. The method according to claim 17, **characterized in that** it comprises the following successive steps:
- assembly of an electrochemical cell comprising first and second electrodes separated by the initial electrolytic solution and,
- *in situ* formation of the passivation layer on the first electrode when first charging of said cell is performed, said charging reducing the diazonium salt of the initial electrolytic solution and performing grafting of at least one aromatic hydrocarbonated cycle of group A and/or A' of said salt on the first electrode.

19. The method according to one of claims 17 and 18, **characterized in that** the first electrode is formed by a material chosen from metals and their alloys, carbon, semiconductors and lithium insertion materials and **in that** the formation step of the passivation layer comprises creation of a covalent bond of C-aryl/metal or C-aryl/carbon type between:
- an aromatic hydrocarbonated cycle of group A and the material of the first electrode and,
- an aromatic hydrocarbonated cycle of group A' and the material of the first electrode, when R₃ is a group of formula (8).

20. The method according to any one of claims 17 to 19, **characterized in that** the diazonium salt is present in the initial electrolytic solution at a molar concentration of less than 0.5 M.
